# EUROPÄISCHE PATENTSCHRIFT

(11) **EP 0 798 626 B1**
(45) Veröffentlichungstag und Bekanntmachung des Hinweises auf die Patenterteilung: **11.07.2001**
(21) Anmeldenummer: 97103932.6
(22) Anmeldetag: 10.03.1997
(51) Int. Cl.: G06F 1/32, G06F 13/40

(54) **Einrichtung für den busvernetzten Betrieb eines elektronischen Gerätes mit Microcontroller sowie deren Verwendung**
Apparatus for operating an electronic device in a bus network with a microcontroller and method therefor
Dispositif d'opération en réseau de bus d'un appareil électronique avec un microcontrôleur et méthode de mise en oeuvre

(30) Priorität: 26.03.1996 DE 19611945
(43) Veröffentlichungstag der Anmeldung: 01.10.1997
(73) Patentinhaber: DaimlerChrysler AG, 70567 Stuttgart (DE)
(72) Erfinder: Hanf, Peter, 73035 Göppingen (DE); Minuth, Jürgen, 73054 Eislingen (DE); Setzer, Jürgen, 75428 Illingen (DE)

(56) Entgegenhaltungen:
- WO-A-90/01189
- GB-A- 2 288 522
- US-A- 5 375 051

## Beschreibung

Die Erfindung bezieht sich auf eine Einrichtung für den busvernetzten Betrieb eines elektronischen Gerätes mit Microcontroller nach der Gattung des Anspruchs 1 und deren Verwendung gemäß Anspruch 29.

Die wachsende Zahl busvernetzter elektronischer Geräte beispielsweise in Industrieanlagen und Verkehrsmitteln, beispielsweise in Kraftfahrzeugen, folgert zwangsläufig Probleme hinsichtlich einer ausreichend sicheren bzw. ausreichend langen Betriebsfähigkeit dann, wenn für den Betrieb nur eine vorbestimmte elektrische Energiemenge zur Verfügung steht, so z.B. aus der Betriebsbatterie eines Verkehrsmittels oder der Stützbatterie einer Produktionsanlage für Noterhalt von Bearbeitungszustandsdaten etc.. Um den Stromverbrauch zu beschränken, ist es bekannt, Geräte, die innerhalb einer bestimmten Betriebsphase nicht benötigt werden, abzuschalten.

So ist es z.B. von von der Anmelderin vermarkteten Fahrzeugen bekannt, in Kraftfahrzeugen Steuergeräte, deren Stromverbrauch bei Stillstand des Fahrzeugs stört, von der Klemme des Zünd-/Startschalters aus mit Strom zu versorgen. Bei abgezogenem Zünd/Start-Schlüssel sind sie so von der Bordstromversorgung ausgenommen. Geräte, deren Betriebsfähigkeit auch bei Nichtbetrieb des Fahrzeugmotors unverzichtbar ist, werden von der dauerstromversorgten Klemme mit Strom versorgt Dokument WO 9001189 von Bosch Gmbh Robest.

Geht man jedoch davon aus, daß allein der Spannungsregler eines jeden solchen dauerstromversorgten Gerätes ca. 500 µA, der Ruhestrombedarf des Transceivers (Empfangsdiskriminator und Endstufe) zwischen Bus und Elektronik ca. 150 *µ*A und der Ruhestrombedarf der jeweiligen Geräteperipherie (z.B. Spannungsteiler, Sensorstromquellen etc.) jeweils ca. 500 µA beträgt, resultiert für jedes Gerät ein Gesamtruhestrombedarf von mehr als 1 mA.

Sind beim Beispiel eines Kraftfahrzeugs mit busvernetzten Steuergeräten z.B. 30 solcher Geräte vorhanden, würde dies einen Gesamtruhestrombedarf von mindestens 30 mA bedeuten. Bei einem Kraftfahrzeug kann dies zur Folge haben, daß das außer Betrieb genommene Kraftfahrzeug infolge beständiger Entladung seiner Batterie nach ca. 3-4 Wochen nicht mehr startbar ist. Dies hat wiederum zur Folge, daß in entsprechenden Kraftfahrzeugen, die z.B. in einen anderen Kontinent verschifft werden sollen, zwecks Sicherstellung ihrer Startbarkeit am Empfangsort vor der Verschiffung eine Abtrennung der Batterie vom Bordnetz erforderlich ist.

Ähnliche Probleme treten auch bei Nutzfahrzeugen für technische Hilfseinsätze auf, die nur selten im Einsatz sind und deren technische Zweckausrüstung busvernetzt ist.

Es ist daher Aufgabe der Erfindung, eine Einrichtung für den busvernetzten Betrieb eines elektronischen Gerätes mit Microcontroller vorzuschlagen, welche es erlaubt, das Gerät aus einem begrenzten Energievorrat längstmöglich in Betriebszuständen mit reduzierter Aktivität zu halten.

Diese Aufgabe wird bei einer gattungsgemäßen Einrichtung mit den kennzeichnenden Merkmalen gemäß Anspruch 1 gelöst.

Die erfindungsgemäße Einrichtung erlaubt einem busvernetzten elektronischen Gerät aus einem begrenzten Energievorrat längstmöglich in Betriebsruhe bzw. -zuständen mit reduzierter Aktivität zu verharren, aus denen heraus es auf kontrollierte Weise normale Aktivität sehr schnell entwickeln kann.
Sie macht die Verfügbarkeit sowohl der Busprotokoll-Funktion als auch des Microcontrollers zum Zwecke der Aufrechterhaltung sowohl der Weckfähigkeit des Gerätes als auch der Wahrnehmungsfähigkeit bezüglich auftretender Busfehler überflüssig.

Erfindungsgemäß umfaßt die Einrichtung hierfür eine aus einem übergeordneten Potential versorgbare, im Signalflußpfad zwischen den beiden Busadern und dem Busprotokoll-Modul angeordnete und wenigstens der zwei Betriebsarten "Senden und Empfang" (NORMAL) und "Schlafen" (SLEEP)) fähige Halbleiterschaltung, die ihrerseits umfaßt: An die beiden Busadern angeschlossene Empfangsmittel, deren Ausgang mit dem Empfangseingang der Busprotokollfunktion kommuniziert und Sendemittel, deren Eingang mit dem Sendeausgang der Busprotokollfunktion kommuniziert; einen Weckeingang aufweisende und mit dem Bus verbundene Weckerkennungsmittel und Schaltmittel zur Bereitstellung an einem Steuerausgang eines Einschaltsignals (ENA/NINH) nach Erkennung eines Wecksignales von besagtem Eingang oder vom Bus und zur Abgabe eines Abschaltsignals (NENA/INH) in der Betriebsart "Schlafen" (SLEEP); einen aus dem übergeordneten Potential versorgbaren Spannungsregler zur Bereitstellung einer geregelten Ausgangsspannung, mit welcher der Microcontroller und das Busprotokoll-Modul mit Betriebsenergie versorgbar sind, wobei der Spannungsregler einen mit dem Steuerausgang der Halbleiterschaltung kommunizierenden Steuereingang aufweist und so beschaffen ist, daß er bei Anliegen des Einschaltsignales (ENA/NINH) einschaltet und bei Anliegen des Abschaltsignals (NENA/INH) abgeschaltet ist.

Gemäß der Fortbildung nach Anspruch 2 verfügt der Regler über autonome Mittel zum definierten Starten des Microcontrollers sobald für diesen die Betriebsspannung bereitgestellt ist.

Gemäß der Fortbildung nach Anspruch 3 ist die Halbleiterschaltung so beschaffen, daß sie beim Auftreten eines die normale Kommunikationsweise über beide Bus-adern beeinträchtigenden Busfehlers sich sowohl bezüglich der Empfangsmittel als auch bezüglich der Sendemittel ohne Unterstützung durch den Microcontroller für die beste noch bestehende Möglichkeit einer Notkommunikation über den Bus einzustellen und/oder umzukonfigurieren und/oder zu adaptieren vermag.

Die gemäß Anspruch 4 fortgebildete Einrichtung umfaßt zwei in Abhängigkeit von der Busteilnehmerzahl festlegbare Abschlußelemente und ihre Halbleiterschaltung Busfehler-Erkennungsmittel und kooperative Busabschluß-Umschaltmittel sowie Busfehler- und Weck-Auswertungsmittel zur Aufbereitung wenigstens eines an den Microcontroller abgebbaren Fehler- bzw. Unterbrechungssignals (ERR/INT) im Weck- oder Busfehlerfall.

Diese Fortbildung verhilft der Einrichtung zu einer besonders schnellen Reaktion auf Wecksignale und BusFehler, da eine Softwarestütze diesbezüglich nicht mehr erforderlich ist.

Weitere Vorteile ergeben sich bei Forbildungen gemäß Ansprüchen 5 bis 28.

So ermöglicht die Fortbildung gemäß Anspruch 5 vermöge einer vom Spannungsregler aus gesteuerten Rücksetzung nach Aufbau der Versorgungsspannung für den Microcontroller die Abgabe wenigstens eines Signals zur Einstellung der Betriebsart der Halbleiterschaltung nach genau definierter Zeit. Dies kann zu Prüfzwecken der Initialisierungsstrecke Regler-Microcontroller auf Fehlerfreiheit ausgenutzt werden.

Die Fortbildung gemäß Anspruch 6 hat den Vorzug, daß auch bei Vorliegen bzw. Auftreten von Busfehlern im SLEEP-Mode eine Weckfähigkeit über den Bus noch weitestgehend erhalten bleibt.

Die Fortbildung gemäß Anspruch 7 leistet eine Einflußnahme auf den Busabschluß bei unterschiedlichen Betriebsarten auch im Fehlerfall auf sehr einfache Weise so, daß alle wesentlichen Elemente integrierbar sind.

Die Fortbildung gemäß Anspruch 8 erübrigt externe Hilfs- und Schutzbeschaltungen.

Die Fortbildung gemäß Anspruch 9 vermeidet bei Vorliegen einer Eigenstörung bzw. eines Eigenfehlers des Gerätes die Beeinträchtigung der Funktion der übrigen Teilnehmer am Bus.

Die Fortbildung gemäß Anspruch 10 verhindert ein Latchup des Busnetzes durch Fehler im Bereich der Sendeendstufe, ihres Eingangssignalpfades und ggfs. ihrer Zustandssteuerung.

Die Fortbildung gemäß Anspruch 11 kann den Stromverbrauch in der zweiten Betriebsart auch im Fehlerfalle reduzieren.

Die Fortbildung gemäß Anspruch 12 bewirkt eine hohe Störsicherheit im Betriebszustand "Schlafen" (SLEEP).

Die Fortbildungen gemäß Ansprüchen 13 bis 15 kommen der weitgehenden Integrierbarkeit aller Ersatzabschlüsse entgegen.

Die Fortbildung gemäß Anspruch 16 erweitert die Funktion der Einrichtung u.a. auch im Hinblick auf eine schnelle Erkennbarkeit von Busfehlern und eine schnellstmögliche Aktivierbarkeit eines mit der Einrichtung ausgestatteten elektronischen Gerätes.

Die Fortbildung gemäß Anspruch 17 erschließt eine Überwachung des übergeordneten Stromversorgungspotentials.

Die Fortbildung gemäß Anspruch 18 ermöglicht eine detailliertere Analyse und Reaktion auf verschiedene Erscheinungsformen von Versorgungseinbrüchen.

Die Fortbildung gemäß Anspruch 19 kommt einer einfachen Integrierbarkeit und Minimierung der Anschlußzahl einer entsprechenden Halbleiterschaltung entgegen.

Die Fortbildung gemäß Anspruch 20 ermöglicht die Realisierung der Detektion eines Abklemmens des elektronischen Geräts von seiner Stromversorgung.

Die Fortbildungen gemäß den Ansprüchen 21 und 22 stellen sicher, daß bei Ausfall der Betriebsspannung oder bewußter Abschaltung eines Gerätes der Bus nicht unkontrolliert belastet wird. Dies dient der Aufrechterhaltung einer ungestörten Buskommunikation bei Versorgungsdefekt oder Abschaltung eines Gerätes.

Die Fortbildung gemäß Anspruch 23 sichert ein schnellstmögliches autonomes Reagieren eines jeden mit der Einrichtung ausgestatteten Gerätes auf einen Busfehler, ohne Erfordernis einer Bus-Kommunikation.

Gemäß Anspruch 24 kann eine hierfür vorgesehene Umkonfiguration so erfolgen, daß Botschaftsverluste gänzlich ausgeschlossen werden.

Eine Fortbildung gemäß Anspruch 25 verhilft der Einrichtung zu einer hohen elektromagnetischen Verträglichkeit und hohen Störungsunterdrückung insbesondere im Fehlerfall.

Bei Ausbildung gemäß Anspruch 26 ist die von der Einrichtung umfaßte Halbleiterschaltung durch Designkompilation zusammen mit anderen Halbleiterschaltkreisfunktionen auf einem Halbleiterchip beliebig erstellt.

Die Fortbildungen gemäß den Ansprüchen 27 und 28 erschließen Vorteile sowohl hinsichtlich der Herstellungskosten eines entsprechenden Gerätes als auch hinsichtlich seiner Baugröße und seines Gewichts.

Der Anspruch 29 betrifft die Verwendung der Einrichtung in einem Verkehrsmittel.

Insgesamt erlaubt die Einrichtung also alle zum Empfang vom Bus benötigten Signaldiskriminatoren und die zum Senden benötigten Busadertreiber (d.h. die Sendeendstufe) und alle Mittel zur Echtzeit-Busfehlererkennung und -behandlung in einer einzigen Halbleiterschaltung zu konzentrieren, welche somit das Physical Layer zwischen dem Busprotokoll-Chip bzw. der Busprotokollfunktion des betreffenden Gerätes und dessen Microcontroller und den zwei Adern eines beispielhaft nach CAN-Standard gestalteten Busses repräsentiert. Sie erübrigt den Betrieb des Microcontrollers zur Erkennung möglicher Busfehler ebenso wie zur fehlerfallweisen Umkonfigurierung der Empfangs- und Sendemittel zwecks Übergang von der differentiellen Zweidraht-Betriebsweise auf eine nur eindrähtige z.B. über Masse.

Durch die Funktionsautonomie der Einrichtung kann auf softwaregestützte und deshalb verhältnismäßig langsame und vor allem die Busprotokollfunktion beanspruchende Tests am Bus verzichtet werden. Dies kommt der Reaktionsschnelle eines entsprechenden Netzwerkes im Falle des Auftretens von Busfehlern zugute (Vermeidung von Botschaftsverlusten).

Der Busprotokoll-Chip braucht bezüglich einer Fehlerüberwachung des Busses dann, wenn das betreffende elektronische Gerät zwecks Stromersparnis abgeschaltet werden soll, keinerlei Funktion mehr zu erfüllen. Dies ist die Voraussetzung dafür, daß der übliche Busprotokoll-Chip bzw. die entsprechende Protokoll-Funktion dann, wenn das betreffende Gerät unter Stromspargesichtspunkten außer Betrieb genommen werden soll, mitabgeschaltet werden kann. Die Abschaltbarkeit der Busprotokoll-Funktion hat zur Folge, daß aus der dadurch erschlossenen Abschaltbarkeit des Spannungsreglers des betreffenden Gerätes eine beträchtliche Stromersparnis resultiert. Es muß nur der Ruhestrom der erfindungsgemäßen Einrichtung gedeckt werden.

Die Einrichtung bezieht diesen Ruhestrom am Spannungsregler des betreffenden elektronischen Gerätes vorbei unmittelbar aus der übergeordneten Stromversorgungsschiene - also z.B. aus der zentralen Bordnetzklemme eines Kraftfahrzeugs. Dank ihrer Verbindung mit jenem Potential kann die Einrichtung des weiteren eine Bewertung eben dieses Versorgungspotentials bzw. eine Kontrolle der ordnungsgemäßen Funktion des Spannungsreglers vornehmen dahingehend, daß im Fehlerfalle der Bus freigeschaltet wird/ bleibt.

Ein Ausführungsbeispiel der Einrichtung ist in der Zeichnung dargestellt und in der nachfolgenden Beschreibung näher erläutert. Es zeigen:
- **Fig. 1**: Ein Blockschaltbild der Einrichtung bei Implementation in einem CAN-Busnetz;
- **Fig. 2**: eine schematische Veranschaulichung verschiedener, zu Funktionsblöcken zusammengefaßter Funktionen der integrierten Halbleiterschaltung 100 in Fig. 1;
- **Fig. 3a**: ein schematisches Wirkschaltbild der durch den Funktionsblock 131 bewirkten Abschlußbeschaltung der Bus-Adern;
- **Fig. 3b**: ein Wirkschaltbild analog zu Fig. 3a bei resistivem Ersatz eigeprägter Stromquellen und mit einer weiteren Schaltfunktion;
- **Fig. 4**: ein schematisches Wirkschaltbild der Einrichtung im CAN-Netzverbund mit anderen derartigen Einrichtungen in der Betriebsart "NORMAL";
- **Fig. 5**: ein schematisches Wirkschaltbild der Einrichtung im CAN-Netzverbund mit anderen derartigen Einrichtungen in der Betriebsart "SLEEP" oder "STANDBY" ohne Busfehler;
- **Fig. 6**: ein schematisches Wirkschaltbild zur Erläuterung der Nichtweckbarkeit aus dem SLEEP-Mode eines symmetrisch terminierten CANs über CAN_L bei Unterbrechung von CAN_H;
- **Fig. 7**: ein schematisches Wirkschaltbild zur Erläuterung der Weckbarkeit aus dem SLEEP-Mode eines asymmetrisch terminierten CANs über CAN_L bei Unterbrechung von CAN_H;
- **Fig. 8**: ein Schema des Spannungsverlaufs auf der asymmetrisch abgeschlossenen Bus-Ader CAN_L bei einem Weckvorgang gemäß Fig. 7;
- **Fig. 9**: ein schematisches Wirkschaltbild der Einrichtung im CAN-Netzverbund mit anderen derartigen Einrichtungen in der Betriebsart "SLEEP" oder "STANDBY" mit Masseschluß an CAN_L;
- **Fig. 10**: ein schematisches Wirkschaltbild der Einrichtung im CAN-Netzverbund mit anderen derartigen Einrichtungen in der Betriebsart "SLEEP" oder "STANDBY" mit Versorgungsschluß an CAN_H;
- **Fig. 11**: eine schematische Illustration der von der Einrichtung unmittelbar erkenn- und behandelbaren Busfehler;
- **Fig. 12a**: ein vereinfachtes Diagramm zur Veranschaulichung verschiedener Spannungsverläufe nach dem Anschalten an eine Betriebsstromquelle;
- **Fig. 12b**: ein Blockschaltbild zur Veranschaulichung der betriebszustandsabhängig unterschiedlichen Auswertung eines Fehler- bzw. Unterbrechungssignals der Einrichtung;
- **Fig. 13**: ein Gesamtblockschaltbild zur groben Veranschaulichung der einfachen Struktur eines mit der Einrichtung ausgestatteten, busvernetzt betreibbaren Geräts.

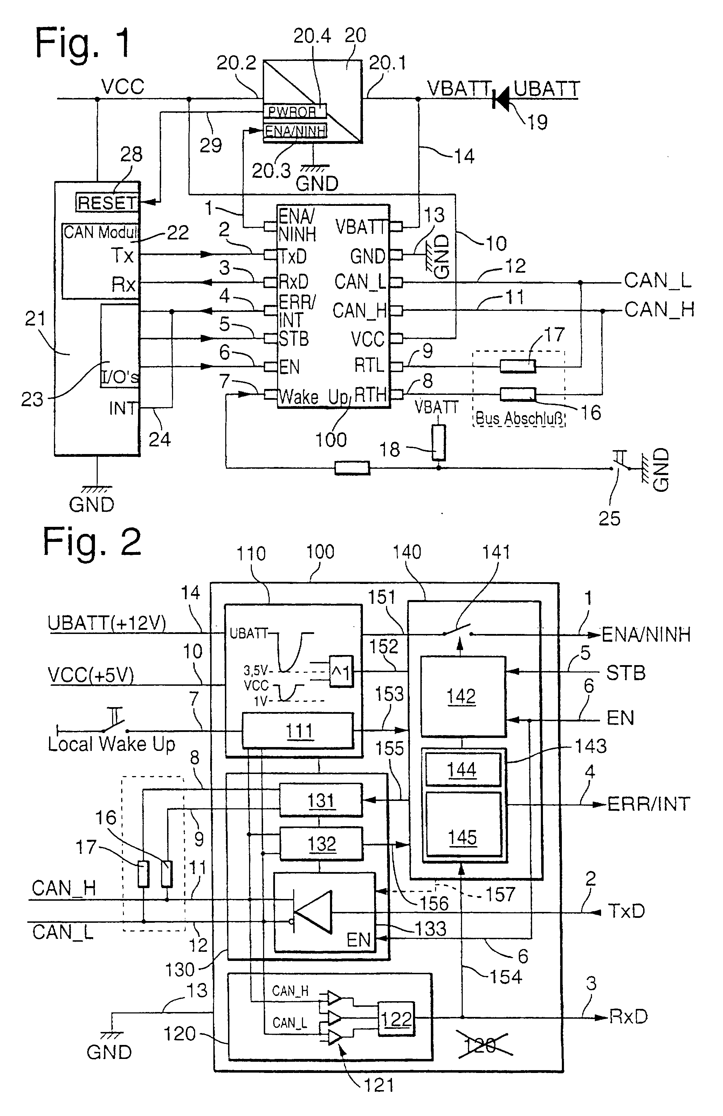

Gemäß Fig. 1 umfaßt die Einrichtung eine integrierte Halbleiterschaltung 100, realisiert in beliebiger Technologie und Gestalt sowie einen elektronisch ein- und ausschaltbaren Spannungsregler 20, der an die Stelle des üblicherweise in entsprechenden elektronischen Geräten enthaltenen Spannungsreglers tritt.

Die Halbleiterschaltung 100 ist hier figürlich als integriertes Bauelement in herkömmlichem Sinne versinnbildlicht. So kann sie auch praktisch ausgeführt sein. Gleichwohl kann es sich dabei aber auch um eine Anlage auf einem monolithischen Halbleiter-Chip handeln, die dort z.B. als Bestandteil einer umfänglicheren Halbleiterschaltung z.B. in der Art einer Standardzelle deponiert ist. Der Rahmen der Erfindung umfaßt jedenfalls ohne Beschränkung auch alle dazwischenliegenden Verkörperungsformen.

Die Halbleiterschaltung 100 ist zwischen die Bus-Adern CAN_H und CAN_L und das dem Microcontroller 21 des betrachteten elektronischen Gerätes zugeordnete Busprotokoll-Modul 22 geschaltet, entkoppelt letzteres also vom Bus CAN_H/CAN_L (Im folgenden bezeichnet CAN_H bzw. CAN_L die jeweilige Bus-Ader, CAN_H/CAN_L hingegen beide Adern, d.h. den Bus als physikalische Zweidrahtleitung).

Zu diesem Zweck sind CAN_H und CAN_L an entsprechende Anschlüsse 11 bzw. 12 der Halbleiterschaltung 100 geführt. Die Halbleiterschaltung 100 ihrerseits ist über je einen Verbindungspfad 2 und 3 für zu sendende Daten TxD und zu empfangende Daten RxD mit dem Tx/Rx-Kommunikationsport des Busprotokoll-Moduls 22 verbunden. Die Halbleiterschaltung 100 steht ferner durch weitere Anschlüsse 8 und 9 über zwei Abschlußwiderstände 16 und 17 mit der entsprechenden Busader CAN_H bzw. CAN_L in Verbindung.

Des weiteren hat die Halbleiterschaltung 100 einen Eingang 7, der über einen Widerstand 18 mit logischem H-Potential, beipielsweise mit Versorgungspotential oder einem Potential, das nahe bei letzterem liegt, verbunden ist. Der Widerstand 18 ist andererseits über einen abgesetzten Schalter 25 mit Masse GND verbindbar.

Die Halbleiterschaltung 100 weist des weiteren wenigstens einen zur Abgabe eines Fehler- und Unterbrechungssignals (ERROR bzw. INTERRUPT) an einem Ausgang 4 auf, der mit einem entsprechend belegten Eingang des I/O-Ports 23 und/oder einem entsprechenden Interrupt-Eingang 24 des Microcontrollers 21 verbunden ist, sowie zwei vice versa in entsprechender Weise aus dem I/O-Port 23 des Microcontrollers 21 angesteuerte Eingänge 5 und 6 für ein STANDBY-Signal (STB am Eingang 5) und ein TRANSMIT-ENABLE-Signal (EN am Eingang 6).

Für ihre Stromversorgung weist die Halbleiterschaltung 100 einen Anschluß 13 gegen Masse GND auf, des weiteren einen Anschluß 14, an welchem das Speisepotential VBATT - vorzugsweise bezogen über eine Verpolungsschutzeinrichtung 19 aus einem übergeordneten Versorgungspotential UBATT - anliegt.

Die Halbleiterschaltung 100 weist des weiteren einen Steuerausgang 1 und einen Eingang 10 auf, die beide mit einem von der Einrichtung mitumfaßten elektronischen Spannungsregler 20 verbunden sind, an dessen Eingang 20.1 ebenfalls das Speisepotential VBATT geführt ist.

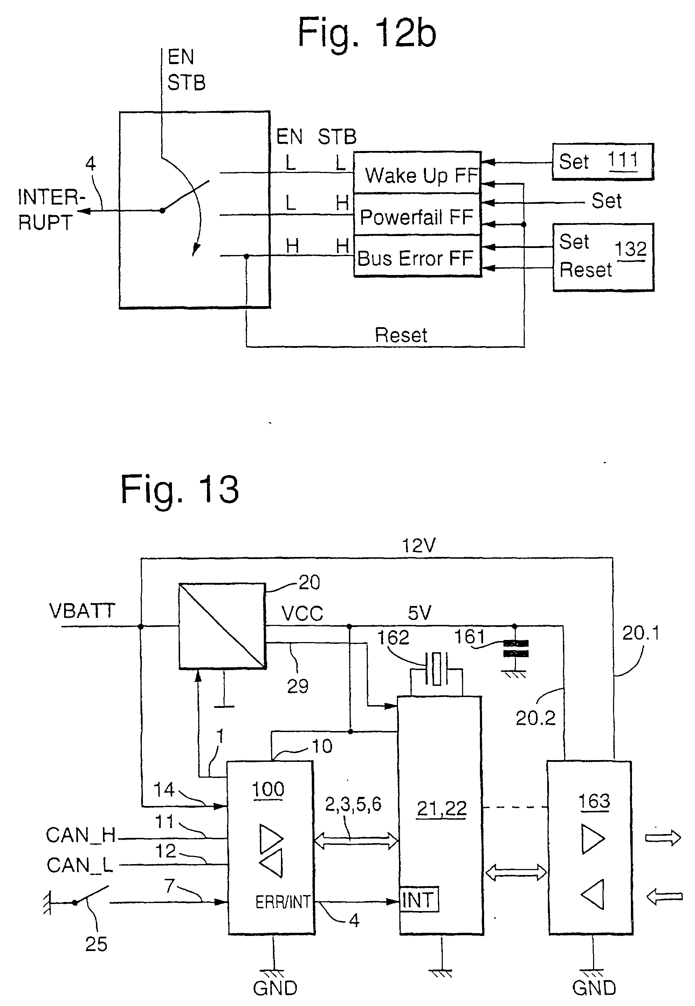

Der Ausgang 20.2 des Reglers 20 ist einerseits mit dem vorgenannten Eingang 10 der Halbleiterschaltung 100 verbunden und versorgt im übrigen den Microcontroller 21 und das Busprotokoll-Modul 22 sowie die übrige, in Fig. 13 figürlich angedeutete Elektronik des die Einrichtung beinhaltenden elektronischen Geräts mit Betriebsstrom bei einer gegenüber VBATT um den Reglerabfall reduzierten Spannung VCC.

Der Regler 20 weist des weiteren einen Eingang 20.3 für ein (VOLTAGE REGULATOR) ENABLE- bzw. -NOTINHIBIT- oder NOTENABLE- bzw. INHIBIT-Signal - im folgenden ENA/NINH bzw. NENA/INH abgekürzt - auf, der mit dem Steuerausgang 1 der Halbleiterschaltung 100 kommuniziert. Des weiteren weist der Regler 20 noch einen POWER ON RESET-Ausgang 20.4 - im folgenden PWROR abgekürzt auf, der über eine Leitung 29 mit einem Reset-Eingang 28 des Microcontrollers 21 kommuniziert.

Zum nachfolgend besseren Verständnis der Funktion der bis hierher beschrieben Einrichtung wird nun zuerst auf die innere Funktionsstruktur der Halbleiterschaltung 100 anhand **Fig. 2** bis **Fig. 8** näher eingegangen.

Gemäß **Fig. 2** ist die Halbleiterschaltung 100 hier beispielhaft in vier Blöcke 110, 120, 130 und 140 aufgeteilt; die für die interne Stromversorgung erforderlichen Speisepfade dieser Blöcke sind in **Fig. 2** aus Übersichtsgründen weggelassen. Die im folgenden beschriebene Verteilung von Detailfunktionen auf diese Blöcke ist nicht absolut zwingend und stellt keine Beschränkung der Erfindung dar. Vielmehr hat sich diese Verteilung für eine erste Realisierung der Halbleiterschaltung 100 als zweckmäßig erwiesen und wird in Abhängigkeit von unterschiedlichen Realisierungstechnologien innerhalb gewisser Grenzen variabel sein.

Eine wesentliche physikalische Funktion der Halbleiterschaltung 100 besteht in der elektrischen Isolation des Busprotokoll-Moduls 22 gegenüber CAN_H und CAN_L, auf welchen Surge- & Load Dump-Transienten auftreten können, welche das - je nach Fabrikationstechnologie mehr oder weniger empfindliche - Busprotokoll-Modul 22 (u.U. auch den gesamten Microcontroller 21) zerstören könnten. Zu diesem Zweck kann die Halbleiterschaltung 100 spezialisierte, hier nicht näher beschriebene Halbleitermittel umfassen, die vorzugsweise im Block 110 enthalten sein können, insbesondere Mittel zum Überspannungsschutz gegenüber der Speisepotentialschiene VBATT. Die Realisierung solcher Mittel sind dem Fachmanne geläufig.

Der Block 110 umfaßt ferner die für die interne Stromversorgung sämtlicher Teilfunktionen aus dem am Anschluß 14 der Halbleiterschaltung 100 anliegenden Speisepotential VBATT erforderlichen Mittel. Ein durch den Block 140 geschleiftes Steuer- bzw. Schaltpotential (zur Generation des ENA/NINH-Signals für den Spannungsregler 20) wird dem Block 140 über einen Pfad 151 zur Verfügung gestellt.

Des weiteren umfaßt der Block 110 Detektormittel, welche einen Einbruch des am Anschluß 14 anliegenden Speisepotentials VBATT bis zur Unterschreitung eines ersten Grenzwertes VL1 (z.B. 3,5 Volt bei einem Kraftfahrzeug) und vorzugsweise auch einen Einbruch des am Anschluß 10 anliegenden Reglerausgangspotentials VCC bis zur Unterschreitung eines zweiten Grenzwertes VL2 (z.B. 1 Volt bei einem Kraftfahrzeug) erfassen, des weiteren optional die Gleichzeitigkeit bzw. zeitliche Abfolge des Eintretens solcher Unterschreitungen. Die Signale besagter Diskriminatoren werden durch logische Mittel zu einem Powerfail-Signal verknüpft, das über einen Pfad 102 an den Block 140 übermittelbar ist und dessen Bedeutung weiter unten noch näher ausgeführt wird.

Des weiteren umfaßt hier beispielhaft der Block 110 noch eine Weck-Erkennungs-Logik (WAKEUP Logic) 111. An diese Logik sind zum einen der oben beschriebene Anschluß 7 und zum anderen die an den Anschlüssen 11 und 12 liegenden Busadern CAN_H und CAN_L geführt. Diese Weck-Logik ist so beschaffen, daß sie sowohl ein analoges Wecksignal bzw. eine Wecksignalflanke vom Anschluß 7 als auch eine Weckbotschaft vom Bus wie auch immer in ein standardisiertes WAKEUP-Signal umsetzen kann, das über den Pfad 103 an den Block 140 (zur Auswertung im Funktionsblock 145) ausgegeben wird.

Der Block 120 umfaßt vorzugsweise alle für das Auslesen des Busses erforderlichen Lesemittel 121, d.h. solche zur differentiellen und eindrähtigen Signalerfassung, einschließlich sämtlicher Fehlerbehandlungs- und Logikmittel 122, die zum busfehlerabhängigen Wechsel der verschiedenen Lesearten (z.B. Zweidraht-, Eindraht gegen GND oder VCC, u.U. auch Eindraht gegen "Dead Wire" etc.) forderlich sind. Diese können vorzugsweise u.a. Bezugspegelvergleicher, Aderpegelvergleicher und/oder Vorzeichendiskriminatoren mit umfassen.

Der Block 120 kann so beschaffen sein, daß er zu einer fehlerresponsiven Einstellung und/oder Umkonfiguration und/oder Adaption seiner Empfangsmittel - unabhängig von den Sendemitteln und deren entsprechender fehlerresponsiven Einstellung und/oder Umkonfiguration und/oder Adaption - **selbsttätig und/ oder selbständig** in der Lage ist, d.h. absolute Betriebs- und Funktionsautonomie aufweist (Fullsupported Receiver).

Das gewonnene digitale Botschaftssignal RxD geben nachgeschaltete Logikmittel 122 sowohl an den Anschluß 3 der Halbleiterschaltung 100 als auch über einen internen Pfad 104 an das Fehlersignalisierungs-Modul 143 im Block 140 ab.

Der Block 130 beinhaltet alle mit dem Signalflußpfad zusammenhängenden Mittel, die bei einer Realisierung zweckmäßigerweise nicht dem Empfangsblock 120 zugeordnet werden und insoweit in weitestem Sinne den Sendemitteln im Signalflußpfad zugeordnet sind.

Dies hängt damit zusammen, daß sowohl die Empfangsals auch die Sendemittel bevorzugt so ausgebildet und dimensioniert sind, daß sie - ohne externer Schutzmittel zu bedürfen - jeweils für sich autonom fehlertolerant gegenüber allen busweit applikationsspezifisch möglichen Fehlerzuständen d.h. durch solche nicht beschädigbar sind. Insoweit sind die außer der Weck-Erkennungs-Logik 111 und den Empfangsmitteln 120 am Bus noch liegenden Funktionsblöcke 131 und 132 bzw. deren Mittel hier beispielhaft dem Sendeblock 130 zugeordnet, der nur insoweit Sendemittel in allerweitestem Sinne enthält; in engem Sinne sind Sendemittel von 133 umfaßt (Die in Abhängigkeit von der jeweils gewählten Realiserungstechnologie der Halbleiterschaltung 100 vorzusehenden Designdetails für schadlose Fehlertoleranz sind an sich bekannt).

Der Block 130 umfaßt den Funktionsblock "Abschlußumschaltmittel" 131 zur Um- und Hochohmigschaltung des Busabschlusses wie durch die Abschlußwiderstände 16 und 17 vorgegeben, einen Funktionsblock 132 "Busfehler-Erkennungsmittel" zur Diskrimination von Fehlerzuständen auf CAN_H/CAN_L, und zwar insbesondere auch Kurzschlüsse jeweils einer Busader nach Masse GND bzw. UBATT im Schlaf- bzw. Bereitschaftszustand (SLEEP/STANDBY), sowie Sendemittel in Form einer in obigem Sinne fehlertoleranten Endstufe 133, welche intern CAN_H- und CAN_L-Einzeltreiber enthält, die ausgangsseitig an die Anschlüsse 11 und 12 geführt sind.

Als wesentliche Elemente kann eine derartige Endstufe High- und Lowside-Schalter umfassen, deren Schaltausgänge über Koppeldioden an den Busadern liegen. Die Endstufe ist jedenfalls so ausgeführt, daß sie in Abhängigkeit von der Art eines auftretenden Busfehlers auf die jeweils noch bestmögliche Notkommunikationsweise eingestellt und/oder umkonfiguriert und/oder adaptiert werden kann (z.B. Wechsel auf Einaderbetrieb). Der Block 130 umfaßt auch erforderlichenfalls hierfür benötigte Mittel.

Optional kann die Endstufe ferner so ausgeführt sein, daß sie bei Auftreten eines Defekts bzw. Eigenfehlers der Halbleiterschaltung 100 vom Bus CAN_H/CAN-L automatisch freigeschaltet wird bzw. bleibt, etwa durch Sperrung ihres EN-Einganges. Eine solche Freischaltung kann von zwangsläufiger Art sein. Optional kann ferner insbesondere im Eigenfehlerfalle auch die Stromversorgung der Endstufe automatisch abschaltbar ausgeführt sein, wodurch insbesondere bei Fehlern im Bereich der Endstufe, ihres Eingangssignalpfades oder ihrer Zustandssteuerung ein Latchup des Bus-Netzes durch Fehlbestromung der Busadern vermieden wird. Die oben erwähnten Kopplungsdioden können in diesem Zusammenhang dann als Entkopplungsventile wirken.

Der Funktionsblock 132 steht mit dem Funktionsblock 131 in Verbindung, des weiteren mit dem Steuerungsblock 140. Er kommuniziert auch mit der Sendeendstufe 133. Letztere weist einen An-/Abschalteingang (TRANSMIT-ENABLE) EN auf, der mit dem Anschluß 6 der Halbleiterschaltung 100 kommuniziert.

Die vorgenannte Möglichkeit einer Zwangsfreischaltung der Endstufe 133 vom Bus CAN_H/CAN_L kann z.B. so realisiert sein, daß der Eingang EN der Endstufe 133 im Falle eines Defekts verriegelbar ist, so daß sich das Sendesignal TxD auf den Bus nicht mehr auswirken kann. Eine solche Zwangsfreischaltung kann auch für den Fall vorgesehen sein, daß das Potential VBATT und/oder VCC unter einen vorbestimmten Schwellwert abfällt, wodurch eine unerwünschte inaktive Bürdelast am Bus vermieden wird.

Der Steuerungsblock 140 erfüllt ebenfalls mehrere Funktionen. Hierzu umfaßt er - als Mittel zur Initialisierung des Microcontrollers 21 - einen gesteuerten Schalter oder ein Gatter 141 zur Abgabe am Anschluß 1 von 100 eines Abschalt- bzw. Einschalt-Signals ENA/NINH für den Spannungsregler 20, einen Funktionsblock 142 zur Erkennung und Einstellung der vom Microcontroller auferlegten Betriebsarten "Schlafen", "Bereitschaft", Nur-Empfang" und "Normal" (entsprechend "Senden und Empfang" (SLEEP, STANDBY, RECEIVE ONLY, NORMAL) der Einrichtung, und ein Fehlersignalisierungs-Modul 143.

Letzteres besteht vorzugsweise aus einem Funktionsblock 144 zur Auswertung von Busfehlern in ein (BUS-) ERROR-INTERRUPT-Signal und einem Funktionsblock 145 zur Erzeugung eines WAKEUP-INTERRUPT-Signals in Abhängigkeit von einem Wecksignal und/oder eines POWERFAIL-INTERRUPT-Signals als Folge eines Versorgungsmangelzustandes wie weiter unten näher erläutert. Wie ebenfalls weiter unten i.V. mit **Fig. 12b** erläutert enthält der Block 143 zwecks Generation dieser verschiedenen Signale beispielsweise wenigstens drei Flag-Flipflops für ein WAKEUP-, ein POWERFAIL und ein BUS ERROR Flag; diese Flags werden betriebsartabhängig als INTERRUPT ausgelesen.

Zur Erkennung der verschiedenen Betriebsarten weist der Funktionsblock 142 hier beispielhaft einen zwei Bit breiten Port auf, bestehend aus Eingang 5 für STB (STANDBY) und Eingang 6 für EN (TRANSMIT-ENABLE), wobei letzterer erwähntermaßen mit dem gleich gekennzeichneten An-/Abschalteingang der Endstufe 133 verbunden ist. Die Erfindung ist selbstverständlich nicht auf die hier beispielhaft vier durch zwei logische Pegel binär selektierbare Betriebsarten der Halbleiterschaltung 100 beschränkt.

Der Funktionsblock 142 ist ferner mit dem Fehlersignalisierungs-Modul 143 verbunden, letztwelches hier beispielhaft einen einzigen, an den Anschluß 4 von 100 geführten Ausgang ERROR/INTERRUPT - im folgenden auch abgekürzt ERR/INT - für ein Fehleranzeige- bzw. Unterbrechungssignal sowie einen internen Eingang aufweist, dem über den bereits erwähnten Pfad 104 das vom Block 120 ausgegebene Botschaftssignal zuführbar ist. Durch eine Zuordnung zu verschiedenen Betriebszuständen der Halbleiterschaltung 100 können einem ERR/INT-Signal an Anschluß 4 unterschiedliche Bedeutungen zugewiesen werden.

Ohne Beschränkung der Allgemeinheit können auch wenigstens zwei designierte Ausgänge ERROR und INTERRUPT vorgesehen sein, deren ERROR- bzw. INTERRUPT-Signale dann nicht betriebsartabhängig interpretiert zu werden brauchen, sofern eine entsprechend größere Anzahl von Anschlüssen für die Halbleiterschaltung 100 tolerierbar ist. Im vorliegenden Beispiel ist ein nur 14-poliges DIL-Pinout für Logikschaltungen etwa im SO-14 Gehäuse zugrundegelegt. Die aufgrund dieser Begrenzung der Anschlußzahl auf insgesamt vierzehn somit erforderliche Uminterpretation des am Ausgang 4 abnehmbaren Signals wird weiter unten i.V. mit Figen. **12a** und **12b** noch erläutert.

Die Funktion der so weit beschriebenen Einrichtung ist folgende.

Vermöge vom Spannungsregler 20 mitumfaßter Mittel erzeugt dieser an seinem Ausgang 20.4 nach jedem Einschalten ein PWROR-Signal und gibt dies über die Verbindung 29 an einen Rücksetzeingang 28 des Microcontrollers 21 ab, um dessen ordnungsgemäße Initialisierung nach Aufbau seiner Speisespannung VCC sicherzustellen.

Da die Einschaltung des Spannungsreglers über ENA/NINH vonseiten der Halbleiterschaltung 100 ausgelöst wird, kann so durch Überwachung in der Halbleiterschaltung 100 der Zeitspanne zwischen der den Regler 20 aktivierenden ENA/NINH-Flanke und eines der EN- und STB-Bits für die Einstellung der Initialbetriebsart der Halbleiterschaltung 100 (also entsprechend t₈ - t₄ in **Fig. 12a**) eine Prüfung der Initialisierungsstrecke Regler-Microcontroller auf Fehlerfreiheit erfolgen.

Die an den Anschlüssen 5 (STANDBY/STB) und 6 (TRANSMIT ENABLE/EN) anliegenden Selektions-Bits selektieren eine der hier beispielhaft vier Betriebsarten **SLEEP, STANDBY, RECEIVE ONLY,** und **NORMAL** der Halbleiterschaltung 100. Diese Betriebsarten werden im Rahmen einer übergeordneten Bus-Management-Software zum Betrieb des Busnetzes verwaltet und explizit von der Applikations-Software des betreffenden elektronischen Gerätes, in welchem die Einrichtung sich befindet, initiiert.

In der Betriebsart **SLEEP** ist der Schalter bzw. das Gate 141 so aktiviert, daß das vom Steuerausgang 1 an den Steuereingang 20.3 des Spannungsreglers ausgegebene logische Signal ENA/NINH zur Abschaltung des Reglers 20 führt. Aus Stromersparnisgründen ist das logische Potential am Steuerausgang 1 in dieser Betriebsart beispielsweise "L". Infolge der Abschaltung des Reglers 20 sind der Microcontroller 21 und das Busprotokoll-Modul 22 ohne Speisespannung VCC und deshalb stromlos. Als unmittelbare Folge kann an/in den/die beiden Eingänge/n 5 (STB) und 6 (EN) stationär nur das Potential Null anstehen bzw. kein Strom fließen, entsprechend also dem Selektionswort "LL" am I/O-Port 23 des Microcontrollers 21 für die beiden Signale STB und EN in der Betriebsart SLEEP.

An der Halbleiterschaltung 100 liegt hierbei also nur die Speisespannung VBATT an, während die Spannung VCC am Anschluß 10 Null ist. Ein - minimaler - Stromverbrauch geschieht also nur durch die Halbleiterschaltung 100 von der Schiene VBATT aus; da VCC = Null, ist die gesamte VCC-versorgte Elektronik des betrachteten Gerätes stromlos.

In der Betriebsart SLEEP muß die Einrichtung nur eine definierte Minimalaktivität auf CAN_H/CAN_L und/oder am Anschluß 7 quasi-statische Weck-Anforderungen z.B. von einem Schalter 25 erkennen, der aus Stromersparnisgründen bevorzugt als Arbeitskontakt nach Masse GND ausgebildet ist, sowie bei Bedarf das ENA/NINH-Signal generieren, kommt also mit 30...500µA Versorgungsstrom aus.

Diese Betriebsart kommt somit für Geräte in Frage, bei denen eine gewisse Zeit duldbar ist, die zwischen dem Aufbau des Potentials VCC und dem Anfachen der internen Clock-Frequenz und der Initialisierung des Watchdogs des Microcontrollers 21 verstreicht (Größenordnung 25 ms).

Im Falle eines Weckens durch Aktivität auf CAN_H/ CAN_L wird eine solche Aktivität von der Weck-Erkennungs-Logik 111 in 110 sensiert, was im Steuerungsblock 140 zur Ansteuerung des Schalters oder Gatters 141, damit zur Aktivierung des Spannungsreglers 20, damit zu Einschaltung von VCC, damit zur Aktivierung des Bus-Protokoll-Chips 21, des Clock-Oszillators des Microcontrollers 21 und seines hier nicht figürlich ausgeführten Watchdogs und ggfs. - über Anschluß 3 - zur Abgabe von Botschaftsdaten an den Rx-Eingang des Busprotokoll-Moduls 22 führt.

Im Falle eines lokalen Weckens durch den Schalter 25 wird durch dessen Betätigung der Eingang 7 auf "L" gesetzt, was vermittels der Weck-Erkennungs-Logik 111 und des Pfades 103 ebenfalls zur Ansteuerung des Schalters oder Gatters 141 und somit zum gleichen Weck-Ergebnis führt. Die Betriebsart NORMAL kann aus der Betriebsart SLEEP durch Sensierung einer WAKEUP-Anforderung entweder über den Bus - also vermittels der Weck-Erkennungs-logik 111 - oder als lokale Anforderung durch den Schalter 25 erfolgen.

Die Betriebsart STANDBY ist dadurch gekennzeichnet, daß das von der Halbleiterschaltung 100 an den Spannungsregler 20 abgegebene ENA/NINH-Signal letzteren einschaltet bzw. eingeschaltet hält. Die Speisespannung VCC ist folglich auch in der Betriebsart STANDBY präsent.

Infolgedessen wird in der Betriebsart STANDBY sowohl das Busprotokoll-Modul 22 als auch die übrige Elektronik des betrachteten Geräts in Betrieb gehalten. Infolgedessen kann vom Microcontroller 21 an den Eingang 5 der Halbleiterschaltung 100 der von "L" abweichende STANDBY-Signalpegel "H" ausgegeben werden.

Die Betriebsart STANDBY kommt somit für Geräte bzw. Fälle infrage, bei denen die gewisse, im Falle der Betriebsart SLEEP duldbare Zeit (Größenordnung 25 ms) **nicht** verloren werden darf, bis der Bus-Protokoll-Chip operationsfähig wird. Praktische Beispiele hierfür wären z.B. die Zylinderneutralfahrt an einer Druckmaschine oder die Infrarot-Fernbedienung der Türverriegelung eines Kraftfahrzeugs, welche zwecks Vermeidung von Ansprechhemmungen und/oder Botschaftsverlusten eine Empfangsbereitschaft binnen kürzester Zeit verlangen.

Die Aktivierung der Halbleiterschaltung 100 in die Betriebsarten STANDBY, RECEIVE ONLY und NORMAL ist insgesamt auf dreierlei Weisen bewirkbar: Vom Microcontroller 21 aus über 4, 5 und 6, per Botschaft über CAN_H/CAN_L und durch lokale Weck-Anforderung etwa durch einen Schaltkontakt.

In allen drei Fällen ist wesentlich, daß bezüglich des Aufbaues des Einschaltsignales ENA/NINH beim Wecken die beiden Steuerbits EN und STB den logischen Zustand "L" haben, während für das anschließende Aufrechterhalten des Einschaltsignales ENA/NINH eines dieser Bits den logischen Pegel "L" verlassen, d.h. "H" sein muß. Die Bereitstellung des Einschaltsignales ENA/NINH ist also in eine Initialisierungsphase unter Kontrolle durch die Halbleiterschaltung 100 (solange der Microcontroller 21 noch nicht vollständig stromversorgt bzw. fertig initialisiert ist) und eine Haltephase unter Kontrolle durch den Microcontroller unterteilt. Nur der Microcontroller kann auf der Basis seiner Applikationssoftware die Halbleiterschaltung 100 wieder in die Betriebsart SLEEP schicken.

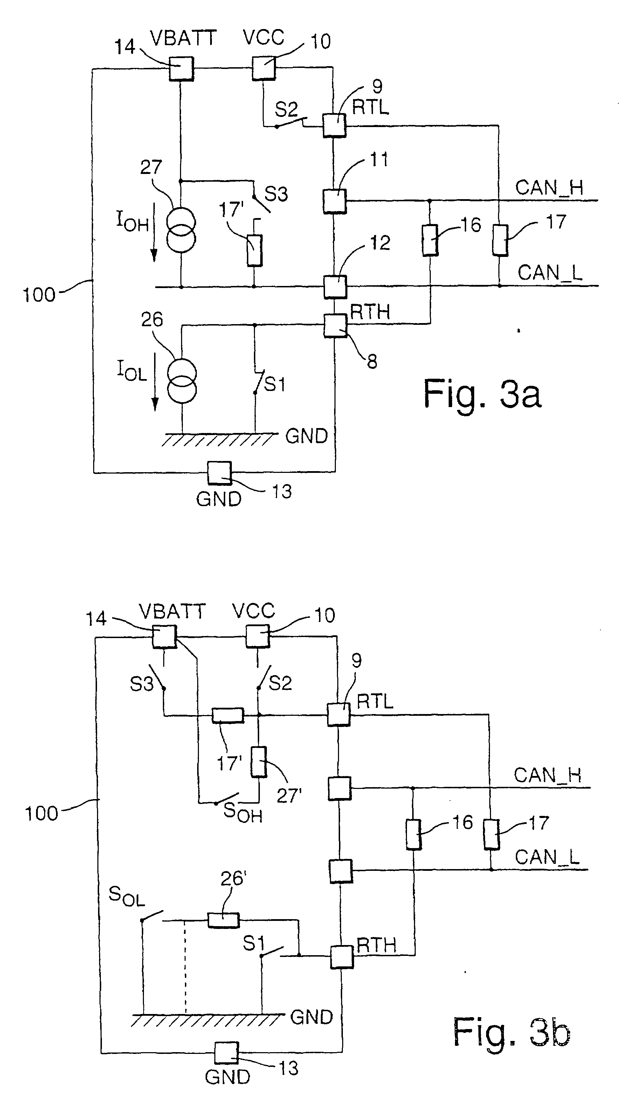

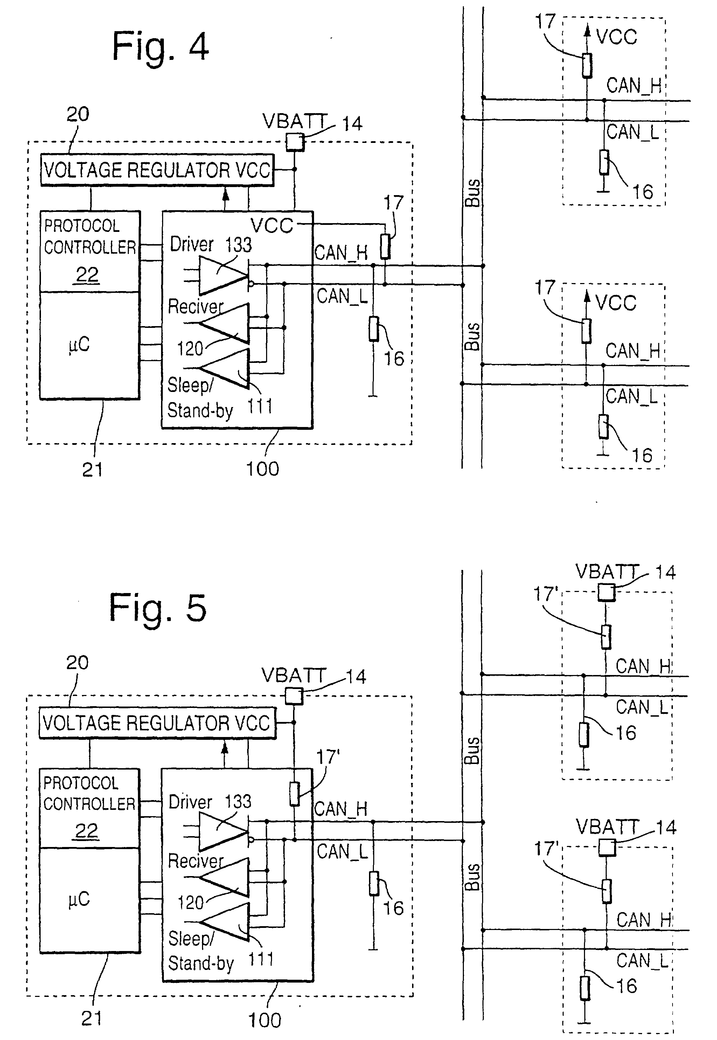

Anhand **Fig. 3a** bis **Fig. 7** wird nunmehr die Wirkungsweise des Funktionsblocks 131 im Hinblick auf die an CAN_H und CAN_L angeschalteten Abschlußwiderstände 16 und 17 erläutert. Dabei veranschaulichen **Fig. 3a** und **Fig. 4** die Abschlußbeschaltung CAN_H und CAN_L im normalen, aktiven Betriebszustand (Senden und Empfangen) ohne Vorliegen eines Busfehlers.

Gemäß **Fig. 3a** enthält der Funktionsblock 131 u.a. einen Schalter S₁, der den Anschlußpunkt 8 mit Masse GND verbinden und dadurch CAN_H über den externen Abschlußwiderstand 16 an Masse schalten kann, einen Schalter S₂, der den Anschlußpunkt 9 mit dem geregelten Speisepotential VCC verbinden und dadurch CAN_L über den externen Abschlußwiderstand 17 an VCC anschalten kann, sowie wenigstens einen weiteren Schalter S₃, der CAN_L über einen internen Widerstand 17' mit dem höheren Speisepotential VBATT verbinden kann. Dabei sind der Schalter S₁ durch eine Stromquelle 26 mit Einprägstrom I_{OL} und der Schalter S₃ durch eine Stromquelle 27 mit Einprägstrom I_{OH} überbrückt. Die Ströme I_{OH} und I_{OL} sind sehr gering und können einheitlich in der Größenordnung von z.B. 1...20 µA liegen.

Ohne Beschränkung der Allgemeinheit können die Stromquellen auch durch hochohmige Widerstände zwischen z.B. 50...250 kΩ ersetzt sein, wie in **Fig. 3b** veranschaulicht.

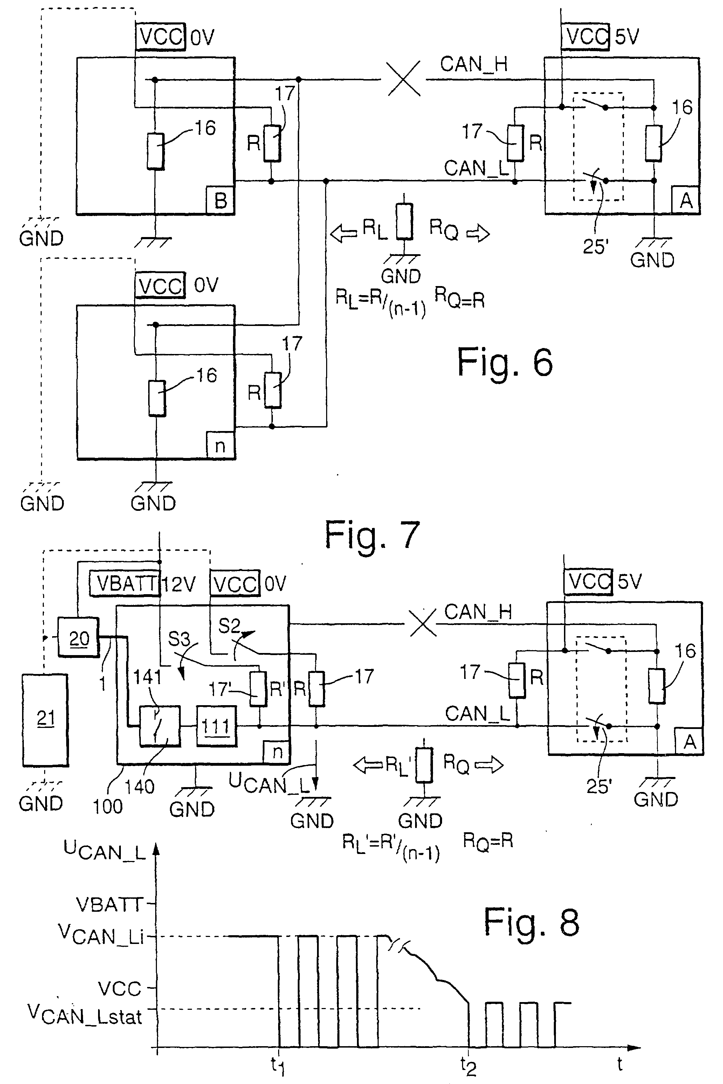

Die Abschlußwiderstände 16 und 17 sind gleich und werden in Abhängigkeit von der vorbekannten Anzahl der Bus-Teilnehmer festgelegt. Normalerweise können sie z.B. 560 Ω ± 5% bei einem größeren Bus-Netz und maximal 15 kΩ ± 5% bei einem kleinen Busnetz aufweisen. Die Niederohmigkeit in größeren Busnetzen folgt einerseits aus der höheren kapazitiven Bürde größerer Netze und andererseits aus der Forderung ausreichender Unterdrückung unerwünschter Einstreuungen statischer und elektromagnetischer Art in einem räumlich weitverzweigten Busnetzwerk. Der vorzugsweise in der Halbleiterschaltung 100 integrierte interne Widerstand 17' weist in einem Busnetz, das für rund 20 Teilnehmer konzipiert ist, einen Wert in der Größenordnung von 12 kΩ auf, basierend auf einem Widerstand 17 in der Größenordnung von 600 Ω für Normalabschluß. Näheres zur Dimensionierung siehe **Fig. 6** und **Fig. 7** und zugehöriger Beschrieb. In der Praxis kann ein ON-Widerstand der Schalter S₁ bis S₃ bis zu 200 n tolerabel sein.

In der Betriebsart NORMAL (Senden und Empfang) sind die Schalter S₁ und S₂ geschlossen, S₃ hingegen offen, d.h. CAN_L liegt über den Widerstand 17 an VCC und CAN_H liegt über den Widerstand 16 an Masse GND. So lange kein Busfehler vorliegt, kann der Einfluß der Ströme I_{OH} und I_{OL} vernachlässigt werden.

Insoweit veranschaulicht **Fig. 4** nur die wesentlichen Teile eines CANs mit beispielhaft drei busvernetzten Geräten A, B und C, d.h. das durch entsprechende Stellung der Schalter S₁ bis S₃ dabei wirksame Netzschaltbild im Betriebszustand **NORMAL.** Es wirken also jeweils alle externen Abschlußwiderstände 16 und 17 der Bus-teilnehmer A bis C an CAN_H bzw. CAN_L parallel.

Hinsichtlich **Fig. 3a** sind in den Betriebsarten SLEEP und STANDBY die Schalter S₁ und S₃ geschlossen, S₂ hingegen offen, d.h. CAN_L liegt nunmehr über den höheren internen Widerstand 17' am höheren Potential VBATT und CAN_H liegt über den Widerstand 16 an Masse GND. So lange kein Busfehler vorliegt, kann der Einfluß der Ströme I_{OH} -und I_{OL} auch hier vernachlässigt werden.

In entsprechender Weise veranschaulicht **Fig. 5** nur die wesentlichen Teile desselben CANs im Betriebszustand **SLEEP** oder **STANDBY,** d.h. das durch entsprechende Stellung der Schalter S₁ bis S₃ dabei wirksame Netzschaltbild. Es wirken also jeweils die externen Abschlußwiderstände 16 und die internen Abschlußwiderstände 17' der Busteilnehmer A bis C an CAN_H bzw. CAN_L parallel.

Es liegt also in den Betriebsarten SLEEP und STANDBY in allen am Netz liegenden Geräten ein asymmetrischer Busabschluß vor, indem sich zum einen die Werte der Widerstände 16 und 17' je nach Anzahl der Busteilnehmer etwa um einen dieser Anzahl entsprechenden Faktor unterscheiden und zum anderen die Widerstände 17' anders als die Widerstände 17 nicht an VCC als Bezugspotential, sondern an der höheren Speisespannung VBATT liegen. Durch diese Maßnahme wird die Weckfähigkeit des CANs über CAN_L auch noch dann sichergestellt, wenn eine Unterbrechung von CAN_H vorliegt, wie nachfolgend anhand **Fig. 6** bis **Fig. 8** erläutert.

In **Figen. 6** und **7** versinnbildlicht der im Gerät A symbolisierte Schalter 25' den elektronischen Schalter, der die Ader CAN_L im Aktivierungsfalle von ihrem hohen rezessiven Pegel auf den nur wenig über Masse GND liegenden aktiven Pegel des CAN_L schaltet. Bezüglich der Pegelverhältnisse wirkt der Schalter 25' also nicht nur ähnlich wie der bereits erwähnte Schalter 25 nach Masse GND am lokalen Weckeingang 7 der Halbleiterschaltung 100. Letztlich wird er innerhalb der Halbleiterschaltung auch wirksam infolge einer Aktivierung eines externen lokalen Weck-Schalters 25.

Gemäß **Fig. 6** sind in der Betriebsart SLEEP die Spannungsregler 20 in den Busteilnehmern A bis n abgeschaltet, wodurch VCC als Terminierungspotential ausfällt, weil infolge Fehlens von VCC alle VCC-Schienen geräteintern virtuell an Masse GND liegen. Wäre hierbei CAN_L durch Widerstände 17' mit einem Wert entsprechend dem der Widerstände 17 und 16 gegen VCC - im SLEEP-Zustand also virtuell gegen Masse GND - terminiert, wäre beispielsweise bei unterbrochener Busader CAN_H ein Wecken über die Busader CAN_L nicht möglich.

Ein Widerstand 17 mit dem Wert R - als Weckquellwiderstand R_{Q} - könnte vom Potential VCC im weckenden Busteilnehmer A aus die Bus-Ader CAN_L gegen den Gesamtlastwiderstand von R_{L} = R/(n-1) (also z.B. 1/20 R aufgrund 20 parallel wirkender Widerstände 17 desselben Wertes R in einem Busnetz mit 21 Teilnehmern) an Masse nur um einen kleinen Bruchteil von VCC auf ein Potentail im Bereich von 100...200 mV anheben, was nicht ausreichte, um eine solche Weckbotschaft störsicher zu lesen. Diese Problematik wächst mit der Zahl der Netzteilnehmer und parasitären Masseoffsets (durch Stromschleifen) z.B. längs ausgedehnten Anlagen oder Fahrzeugen.

Die Maßnahme gemäß **Fig. 7** schafft hier Abhilfe. Der Widerstand 17' weist hier einen erheblich größeren Wert auf, der etwa einem Vielfachen entsprechend der erwartbaren Anzahl n von Geräten am Bus entspricht (also z.B. ca. 12 kOhm, wenn der Widerstand 17 ca. 600 Ω in einem Busnetz mit etwa 20 Teilnehmern entspricht). Das weckende Gerät A "sieht" folglich den insgesamt größeren Lastwiderstand R_{L}' = R'/(n-1)

Außerdem liegt dieser Widerstand 17' nicht an dem im Betriebszustand SLEEP verschwindenden Potential VCC (normalerweise ca. 5 Volt), sondern - vermittels S₃ anschaltbar - an dem wesentlich höheren, auch in der Betriebart SLEEP verfügbaren Speisepotential VBATT (beispielsweise ca. 12 Volt).

Durch diese Maßnahme wechselt also die Source-Funktion des in **Fig. 6** weckenden Gerätes A über in eine Source-Funktion der Vielschaft aller zu weckenden Geräte B bis n am Bus, während dem weckenden Gerät A diesbezüglich eine Sink-Funktion verbleibt.

Der Spannungsverlauf auf der Ader CAN_L des so im SLEEP-Zustand asymmetrisch abgeschlossenen CANs ab dem Beginn zur Zeit t₁ eines Weckvorganges über diese Ader ist in **Fig. 8** veranschaulicht. Initial hat der Spannungshub auf CAN_L einen Wert V_{CAN_Li} zwischen VCC und VBATT. Ausgelöst durch die (bei diesem großen Spannungshub störfrei erkennbare) Weckbotschaft über CAN_L erzeugt in jedem der am Bus liegenden Teilnehmer-Geräte A bis n die Halbleiterschaltung 100 das ENA/NINH-Signal, welches einerseits über die bereits erwähnten Funktionsblöcke 111 und 140 samt Schalter bzw. Gatter 141 alle Spannungsregler 20 in diesen Geräten einschaltet und damit VCC in jedem Gerät verfügbar macht.

Andererseits wird bei Verfügbarkeit von VCC mittels des Schalters S₃ die Verbindung zwischen CAN_L und dem Speisepotential VBATT über den hochohmigen Abschlußwiderstand 17' aufgetrennt und stattdessen CAN_L vermittels S₂ durch den normalen Abschlußwiderstand 17 mit dem niedrigeren Speisepotential VCC verbunden. Es ist also ersichtlich, daß zu einem Zeitpunkt t₂ der Abfall des Spannungshubes am Bus über Masse GND auf einen stationären Wert V_{CAN_Lstat} abgeschlossen ist, wobei die Zeitspanne (t₂ - t₁) im wesentlichen der Über-Alles-Response-Zeit der Halbleiterschaltung 100 und des Reglers 20 auf ein Wecksignal ist.

An dieser Stelle sei angemerkt, daß innerhalb eines Busnetzes einzelne Busteilnehmer durchaus in der Betriebsart STANDBY und andere im SLEEP-Zustand verharren können. Ein Wecken anderer Busteilnehmer könnte hierbei auch durch ein in der Betriebsart STANDBY befindliches Gerät erfolgen, wenn hierfür im Sinne des symbolischen Schalters 25' der Lowside-Schalter der Endstufe 133 aktivierbar ist.

Ein Beispiel für die Anwendung der Betriebsart STANDBY ist z.B. der (wartende) Materialbahneinzug einer Druckmaschine oder der Infrarotempfangsteil einer Schließanlage eines Fahrzeugs, der ununterbrochen auf das Eintreffen des Materialzulaufs bzw. codierten Entriegelungssignals warten muß. In diesem Zustand ist bei einem solchen Gerät der Regler 20 eingeschaltet, VCC folglich präsent, so daß der Zeitverbrauch. (t₂ - t₁) bis zu einer Response über den Bus größtenteils entfällt.

Ohne Beschränkung der Allgemeinheit kann der Funktionsblock 131 auch ein Wirkschema gemäß **Fig. 3b** aufweisen; in diesem Falle wirken die Widerstände 17 und 17' jeweils in Serie. Der Widerstand 17' wäre insoweit am Anschluß 9 der Halbleiterschaltung 100 wirksam. Grundsätzliches ändert sich dadurch an der Netzbetrachtung gemäß **Figen. 4** bis **11** jedoch nicht.

Des weiteren ist in **Fig. 3b** veranschaulicht, daß der mit der Stromquelle 26 in **Fig. 3a** korrespondierende Widerstand 26' gleichwohl mit Masse GND auch über einen besonderen Schalter S_{OT} freischaltbar verbunden sein kann, um beispielsweise i.Z. mit der automatischen Anpassung der Pegelkomparation der Empfangsmittel 120 und/oder der Sendeendstufe 133 im Falle eines Busfehlers oder bei externen Diagnosemessungen am Bus eine Testfunktion zu ermöglichen. Diese Wirkung könnte bei einer Lösung gemäß **Fig. 3a** auch durch eine Abschnürsteuerung der Stromquelle 26 realisiert werden.

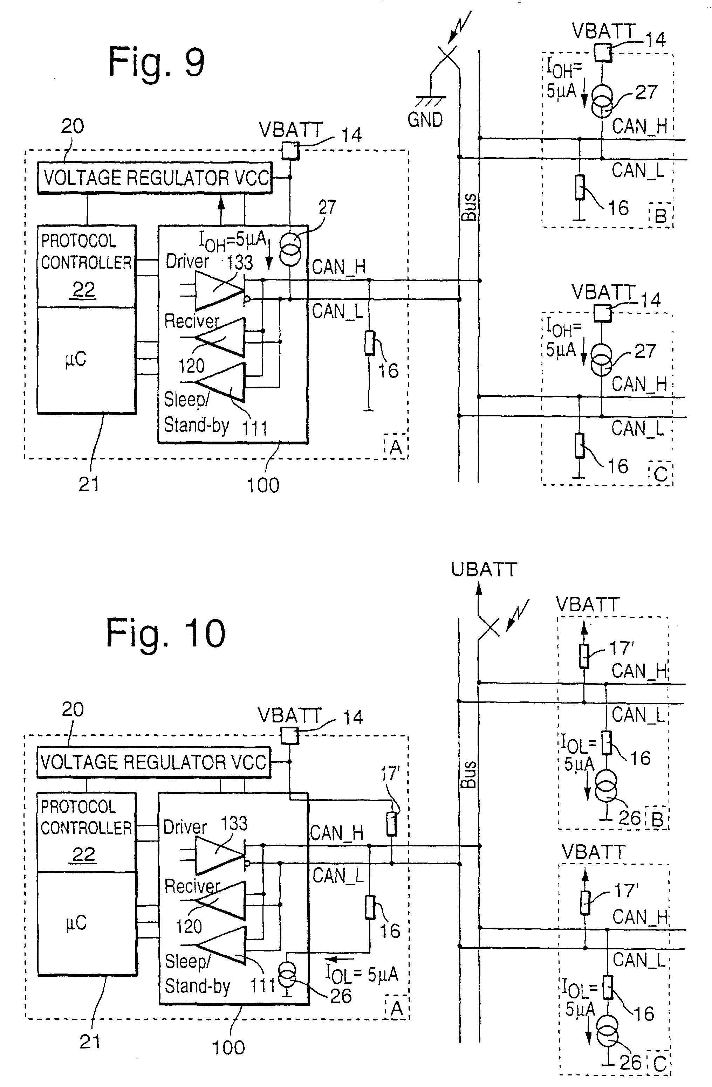

Auf der Basis des Wirkschaltbildes gemäß **Fig. 3a** veranschaulicht nun **Fig. 9** die Verhältnisse im weiten Netzverbund bei Kurzschluß der Bus-Ader CAN_L nach Masse GND in der Betriebsart "SLEEP" oder "STANDBY".

Bei einem Widerstand 17' von z.B. 12 kΩ träte in diesem Fall in einem beispielhaft 20 Teilnehmer umfassenden Netz busweit ein resultierender Leckwiderstand von 600 Ω zwischen dem internen Geräte-Speisepotential VBATT von z.B. 12 Volt und Masse GND auf, d.h. busweit ein Leckstrom von 20 mA, der zu einer raschen Entladung einer Batterie als Versorgungsquelle führen könnte.

Im Falle eines solchen Kurzschlusses wird dieser deshalb vom oben erwähnten Funktionsblock 132 der Halbleiterschaltung 100 (Fehlererkennungs-Modul) in jedem einzelnen Busteilnehmer erkannt, was im Funktionsblock 131 bewirkt, daß jeweils der Schalter S₂ öffnet und der Schalter S₃ schließt, wodurch die Stromquellen 27 wirksam werden. Deren verhältnismäßig geringer Strom von z.B. nur 5µA ergibt bei 20 Geräten busweit nur 0,1 mA Leckstrom. Dieser Strom ist klein genug, daß er in der natürlichen Selbstentladungsrate beispielsweise einer Notstrom- oder Starterbatterie völlig untergeht.

Entsprechend veranschaulicht **Fig. 10** die Verhältnisse im Netzverbund bei Kurzschluß der Bus-Ader CAN_H mit einer Bordnetzschiene an UBATT in der Betriebsart "SLEEP" oder "STANDBY" (Versorgungsbordschluß).

Bei einem Widerstand 16 von z.B. 600 Ω träte in diesem Fall in einem beispielhaft 20 Teilnehmer umfassenden Netz busweit ein resultierender Leckwiderstand von 30 Ω zwischen z.B. der Bordnetzklemme 30 mit ca. 13 Volt und Masse GND auf. Dies hätte busweit einen Gesamtleckstrom von 430 mA zur Folge, der zu einem noch rascheren Abbau der beispielhaft zum Starten der Brennkraftmaschine benötigten Batterieladung führte.

Tritt ein solcher Kurzschluß auf, wird er von dem oben erwähnten Fehlererkennungs-Modul 132 der Halbleiterschaltung 100 in jedem einzelnen Busteilnehmer erkannt. Dies bewirkt im Funktionsblock 131, daß jeweils der Schalter S₁ geöffnet wird, wodurch die Stromquellen 26 wirksam werden. Deren verhältnismäßig geringer Strom von z.B. nur 5µA ergibt bei 20 Geräten busweit auch nur vernachlässigbare 0,1 mA Leckstrom.

Beim Vorliegen eines Kurzschlusses von CAN_H nach UBATT oder GND oder CAN_L nach Masse GND oder UBATT besteht bezüglich der Umschaltung des Busabschlusses vermittels der Schalter S₁ bis S₃ kein grundsätzlicher Unterschied in Abhängigkeit davon, ob der betreffende Kurzschluß bereits vorliegt, wenn der Microcontroller 21 die SLEEP- oder STANDBY-Zustandsinstruktion an die Halbleiterschaltung 100 überträgt, oder ob der Kurzschluß erst auftritt nachdem zuvor der SLEEP- oder STANDBY-Betriebszustand ordnungsgemäß erreicht worden ist.

Die festverdrahtete Logik der Halbleiterschaltung 100 bewirkt, daß der die kurzschlußfehlerhafte Bus-Ader überwachende Pegeldiskriminator oder Komparator innerhalb des Funktionsblocks 132 verriegelt wird und als unmittelbare Folge dieses Schaltvorganges der (lokale) Abschluß an eben diese Busader auf "Kurzschluß erkannt" umgeschaltet wird, d.h. die Stromquelle 26 oder 27 bzw. der Widerstand 26' oder 27' wirksam geschaltet wird.

Sobald der Kurzschluß verschwindet, zieht der entsprechende, sehr geringe Eingangsstrom (in Fig. 3a z.B. an 8 (RTH) oder 12 (CAN_L) im SLEEP-oder STANDBY-Betriebszustand die betreffende Bus-Ader auf ein Potential nahe dem in diesen Betriebsarten normalen Potential. Als Folge wird der Bus-Abschluß auf den im SLEEP- und STANDBY-Betriebszustand normalen umgeschaltet (16 und 17' wirksam).

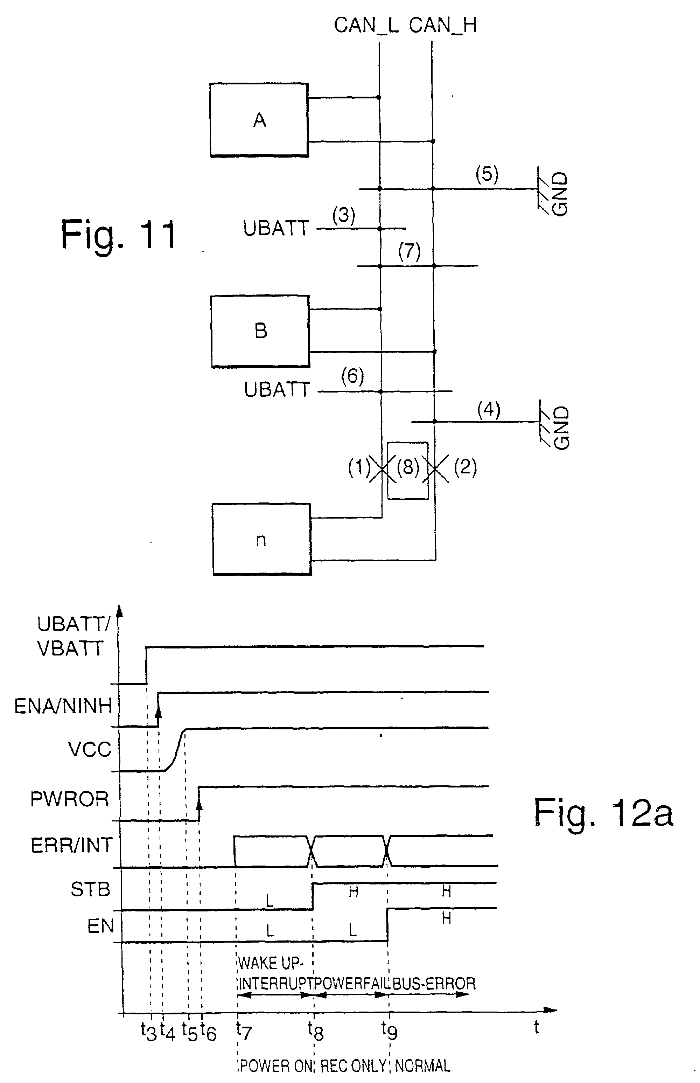

Zur Übersicht sind in **Fig. 11** alle von der Halbleiterschaltung 100 insgesamt erkennbaren Einfach-Fehlerzustände im Busnetz zusammengestellt, wobei die geklammerten Ziffern die einzelnen Busfehler gemäß nachfolgender Liste repäsentieren:
(1) Unterbrechung von CAN_L
(2) Unterbrechung von CAN_H
(3) Versorgungsschluß an CAN_L
(4) Masseschluß von CAN_H
(5) Masseschluß von CAN_L
(6) Versorgungsschluß an CAN_H
(7) Kurzschluß zwischen CAN_H und CAN_L

Beim Busfehler
(8) Paarige Unterbrechung von CAN_H und CAN_L
handelt es sich in Strenge um einen Doppelfehler, der deshalb **unmittelbar** eindeutig nur von der Halbleiterschaltung 100 im Gerät n erkannt werden kann (z.B. zwecks Failsafe-Auslösung der von diesem Gerät normalerweise zu steuernden Funktion).

Wesentlich ist, daß die in der Halbleiterschaltung festverdrahtete Bus-Error-Response-Logik in jedem einzelnen Busteilnehmer - mit der busweiten Wirkung einer verteilten Fehlerbehandlungsintelligenz im Netz - die Realisierung von Fehler-Responsezeiten in der Größenordnung von einer (Bus-)Bitzeit und darunter ermöglicht, so daß Botschaftsverluste im Zuge einer busfehlerbedingten Umkonfiguration der Sende- und Empfangskomponenten von 100 weitgehend oder vollständig vermieden werden können. Dies ist ein großer Vorzug gegenüber allen auf Softwarebasis zentral ausgerichteten Busmasterlösungen.

In die Halbleiterschaltung 100 implementiert ist ferner die schon erwähnte Versorgungsüberwachung, deren Zweck und Funktion sich wie folgt erklären.

Durch die Abschaltbarkeit des Spannungsreglers 20 im SLEEP-Zustand wird der Microcontroller 21 regelmäßig stromlos. Deshalb muß eine Initialisierung des Mikrorechners aus dem stromlosen Zustand vorgesehen werden, sobald der Regler über seinen PWROR-Ausgang 20.4 den Microcontroller 21 zurückgesetzt hat.

Im Falle des Beispiels eines Kraftfahrzeugs muß der Microcontroller in die Lage versetzt werden, bei jeder neuen Inbetriebnahme auf inkrementale Daten, die zumindest während des letzten Betriebs des Kraftfahrzeugs Gültigkeit hatten und Einstellzuständen entsprechen, wie sie der Benutzer vor der erneuten Inbetriebnahme vorfindet, zurückzugreifen, also beispielsweise auf Daten, welche die Einstellung von verstellbaren Sitzen, Rückspiegeln, etc. betreffen.

Dies wird typischerweise durch Abspeicherung der Daten in einem EEPROM des Microcontrollers 21 und deren Ladung ins RAM des letzteren beim Beginn einer jeden Inbetriebnahme geleistet. Auf diese Weise werden Anschlagsläufe zur Feststellung der aktuellen Einstellposition in Bezug auf die Endanschläge verstellbarer Elemente und der hierfür unumgängliche und lästige Zeitverbrauch überflüssig.

Im Falle, daß das den Microcontroller 21 enthaltende Gerät aus einem Bussystem entfernt wird, um es z.B. zu ersetzen oder in ein anderes Busnetz einzusetzen, tritt in diesem Zusammenhang das Problem auf, daß der Microcontroller allein für sich genommen eine solche Handhabung des ihn enthaltenden Geräts als (eigentliche) Ursache für eine zuvor eingetretene Stromlosigkeit nicht erfassen kann.

Aus diesem Grund würde er - nach der Einrüstung des betreffenden Gerätes in ein neues Bus-Netz - auch im neuen Bus-Netz die zuvor eingelernten und in seinem EEPROM aufbewahrten Daten weiterhin als gültige betrachten und verwenden, was bei der Inbetriebnahme im neuen Bus-Netz zu Fehlsteuerungen der von dem betrachteten Gerät zu steuernden Elemente führte.

Dieser Problematik abzuhelfen ist Aufgabe der in die Halbleiterschaltung 100 mitintegrierten Versorgungsüberwachung und insbesondere des aus der Diskrimination der Spannungspegel VBATT und VCC im Funktionsblock 110 abgeleiteten POWERFAIL-Kriteriums, welches über den Pfad 102 in den Steuerungsblock 140 gelangt. Dabei wird ausgenutzt, daß die Halbleiterschaltung 100 ihre elektrische Versorgung aus dem dem Regler 20 vorgelagerten, höheren Potential VBATT bezieht, welches bei Unterbrechung der Versorgung aus dem übergeordneten Potential UBATT - bei einem Fahrzeug beispielsweise durch Unterbrechung der Stromzufuhr von Klemme 30 - schneller zusammenbricht als das durch Sieb- und Stützkapazitäten 161 wie aus Fig. 13 ersichtlich für gewisse Mindestzeitspannen zu haltende Potential VCC.

Zu diesem Zweck werden im Funktionsblock 110 Spannungspegelüberwachungen beispielhaft gemäß nachfolgendem Schema vorgenommen und ausgewertet; dabei sind ohne Beschränkung der Allgemeinheit beispielhaft wieder die Situation in einem Kraftfahrzeug und dabei beispielhaft auftretende Spannungen zugrundegelegt:

Ist z.B. VBATT > 6V und VCC = 5V, darf weder der Microcontroller 21 noch die Halbleiterschaltung 100 einen Powerfail-Zustand erkennen.

Der Funktionsblock 110 diskriminiert jedenfalls VBATT mit normalerweise 12 Volt gegen einen Grenzwert VL1 von beispielsweise 3,5 Volt. Für den Fall, daß der Microcontroller 21 bzw. dessen Watchdog keine eigene Powerfail-Erkennung aufweist, diskriminiert er des weiteren VCC mit normalerweise 5V gegen einen zweiten Grenzwert VL2 von beispielsweise 1V (Grenzspannung für dynamische Datenhalbarkeit im RAM des Microcontrollers 21).

Im Rahmen der Erfindung soll unerheblich sein, ob der Microcontroller über eine eigene Powerfail-Erkennung für VCC verfügt. Denkbar ist auch, daß beispielsweise eine hier nicht näher beschriebene, separate Watchdog-Funktion für den Microcontroller eine entsprechende VCC-Diskriminierung und -Auswertung leistet, soweit die von der Einrichtung vorteilhaft mitumfaßte nicht oder anders genutzt wird.

Im Rahmen der Erfindung kann unabhängig davon, ob der Microcontroller 21 sich noch auf eigene Hilfsschaltungen wie z.B. eine watchdogarmierte Versorgungsspannungsüberwachung stützt, an 4 ein POWERFAIL-INTERRUPT-Signal ausgegeben werden, das entweder nur auf eine Diskrimination von VBATT oder auf eine kombinierte Diskrimination von VBATT und VCC zurückgeht. Wenn nachfolgend also von einem Powerfail-Flag der Halbleiterschaltung 100 die Rede ist, bedeutet dies nicht, daß der Microcontroller 21 keine eigene VCC-Überwachung hat oder über keine Hilfsmittel verfügt, die eine solche leisten.

Beispielsweise anläßlich eines Motorstarts wird bei VBATT > VL1 und VCC > VL2 weder für VBATT noch für VCC auf Powerfail erkannt, und folglich an 4 auch kein entsprechendes Signal ausgegeben. Der Microcontroller 21 erkennt folglich bei seinem Neustart nach Reset am Fehlen (Nichtgesetztsein) des Powerfail-Flags im Funktionsblock 145 bzw. 143 bezüglich VCC und/oder VBATT, daß weder ein Neueinlernen noch ein Update von inkrementalen Daten aus dem eigenen EEPROM erforderlich ist, arbeitet also mit den aktuell in seinem RAM befindlichen weiter. Das Powerfail-Flag wird hierbei beispielsweise gemäß **Fig. 12a** im Zeitraum zwischen t₈ und t₉ gelesen und dann, wenn es vor dem Übergang des vom Microcontroller 21 ausgegebenen Signals EN von "L" nach "H" gesetzt ist, in ein INTERRUPT-Signal an 4 ausgewertet, welches vom Microcontroller 21 als wahr erkannt und als POWERFAIL-INTERRUPT interpretiert wird.

Bei einem erschwerten Motorstart im Winter kann die Bordnetzspannung UBATT jedoch von der anfänglichen Nennspannung für kurze Zeit sehr weit, nämlich unter VL1 abfallen, mit der Folge, daß auch VBATT entsprechend weit abfällt, während VCC nach initialer Bestromung des Reglers 20 vermöge einer letzterem nachgeordneten Stützkapazität 161 noch oberhalb VL2 gehalten wird. Im Block 110 wird deshalb zwar der Versorgungszustand VBATT < VL1 erkannt, zugleich aber der Versorgungszustand VCC > VL2, was im Funktionsblock 145 bzw. 143 das Setzen des Powerfail-Flags verhindert (Inhibit).

Aus dem Nichtgesetztsein des Powerfail-Flags folgt die Nichtausgabe eines INTERRUPT-Signals an 4 (aus Powerfail für VBATT). Der Microcontroller 21 erkennt aus dem Fehlen dieses Interrupts, daß weder ein Neueinlernen noch ein Update inkrementeller Daten aus dem eigenen EEPROM erforderlich ist und arbeitet mit den in seinem RAM aktuell befindlichen Daten weiter.

Hingegen kann im Falle eines normal abgelaufenen Motorstarts, jedoch (z.B. kurzzeitigen) Zusammenbruchs des Speisepotentials VCC aus welchen Gründen auch immer die Situation VBATT > VL1, VCC < VL2 auftreten. Diesbezüglich ist eine Auswertung wie folgt möglich. Logische Mittel im Funktionsblock 145 bzw. 143 bewirken, daß in diesem Falle ein Setzen des Powerfail-Flags in 143 und somit die Ausgabe eines INTERRUPTs an 4 unterbleibt.

Verfügt der Microcontroller 21 über eine eigene VCC-Überwachung oder eine solche ihm besorgende Hilfsmittel, d.h. über ein eigenes Powerfail-Flag, kann er am Fehlen des externen POWERFAIL-INTERRUPTs an 4 von 100 und dem Gesetztsein seines eigenen VCC-Powerfail-Flags erkennen, daß ein Neueinlernen von inkrementellen Daten nicht erforderlich ist, jedoch die Daten, die aktuell gelten sollen, zuerst aus seinem EEPROM in sein RAM geladen werden müssen.

Der letzte Fall des vollständigen Zusammenbruchs des Bordnetzes beispielsweise anläßlich langanhaltender Startversuche - mit der Wirkung, daß auch VCC zusammenbricht - wird gleich behandelt wie der Ausbau der Batterie oder eine Unterbrechung der Stromversorgung von Klemme 30 zum betrachteten Busteilnehmer, d.h. wie die Entfernung eines entsprechenden Gerätes aus seinem Bus-Netz.

In einem solchen Falle wird VBATT < VL1 = 3,5 Volt und VCC < VL2 = 1 Volt. Diese beiden Bedingungen haben ein Setzen des Powerfail-Flags im Funktionsblock 145 bzw. 143 zur Folge und folglich die Ausgabe eines POWERFAIL-INTERRUPT-Signals an 4 von 100. Außerdem wird im Microcontroller auch dessen Powerfail-Flag bezüglich VCC gesetzt. Diesen Zustand und das POWERFAIL-INTERRUPT-Signal an 4 wertet der Microcontroller 21 als Erfolgtsein einer Abtrennung und eines Wiederanschlusses an die dauerstromversorgte Klemme 30 aus. Dies bewirkt, daß er beim Neustart Endanschläge und relative Lage(n) des von ihm gesteuerten Elements einlernt und in sein EEPROM abspeichert.

Da speziell im SLEEP-Zustand VCC = 0 Volt und in bzw. aus diesem Zustand immer ein Powerfail bezüglich VCC vom Microcontroller erkannt werden kann, kommt es bezüglich der Auswertung, ob das den Microcontroller 21 und die erfindungsgemäße Einrichtung enthaltende elektronische Gerät im SLEEP-Zustand von seiner Stromversorgung getrennt wurde, im wesentlichen auf die Powerfail-Erkennung bezüglich VBATT im Funktionsblock 145 bzw. 143 an, die in der beschriebenen Weise seitens der Einrichtung geleistet wird.

Durch geeignete Bemessung von Stützkapazitäten für VCC bzw. daraus abgeleitete Versorgungspotentiale digitaler Schaltkreisfunktionen in Verbindung mit dem Microcontroller 21 kann z.B. die Forderung erfüllt werden, daß eine z.B. 1,5 Sekunden dauernde Unterbrechung des Versorgungspotentials UBATT ohne Datenverlust und Powerfail-Erkennung bezüglich VCC möglich ist, daß hingegen nach einer Unterbrechungsdauer von beispielsweise wenigstens 30 Sekunden beim Neustart des Microcontrollers ein Neulernzyklus bezüglich der auf Endanschläge inkremental abzuspeichernden Daten ausgelöst wird.

Der Rahmen der Erfindung ist im Hinblick auf die möglichen Funktionen der Blöcke 110 und 143 nicht auf die vorgenannten beispielhaften Versorgungsüberwachungen beschränkt. Insoweit können auch andere, die sich von den obigen unterscheiden, je nach Anwendungsfall zweckmäßig sein. Insbesondere kann die Halbleiterschaltung dann, wenn sie eine größere Zahl von Anschlüssen aufweisen kann (so z.B. auch bei Integration als Standardzelle) noch zusätzliche Eingänge zur Selektion verschiedener fest programmierter Versorgungsüberwachungsarten aufweisen, die gemäß Selektionsbeschaltung bzw. -ansteuerung auswählbar sind.

In Zusammenhang mit einer solchen Versorgungsüberwachung kann optional die bereits erwähnte Zwangsfreischaltung der Sendeendstufe 133 vorgesehen sein mit der Wirkung, daß die Endstufe 133 von CAN-H/CAN_L abgetrennt wird, wenn das Potential VBATT und/oder VCC unter einen vorbestimmten Schwellwert abfällt, wodurch eine die Funktion des Busses beeinträchtigende Bürde vermieden wird. Diesen Aspekt versinnbildlicht die Verbindung 157 in **Fig. 2**.

Wie sich die Einrichtung bezüglich wesentlicher Spannungs- und Signalpegel nach der Beaufschlagung mit dem Versorgungs-/Speisepotential UBATT/VBATT und der kooperierende Microcontroller bezüglich des hier beispielhaft zustandsabhängig zu interpretierenden ERR/INT-Signals verhält, ist in **Fig. 12a** zeitdiagrammatisch und in **Fig. 12b** auch anhand eines Funktionschaltbildes dargestellt.

Demgemäß erfolgt zur Zeit t₃ die Anschaltung der Einrichtung an UBATT bzw. VBATT. Nach kurzer Verzögerung gibt die Halbleiterschaltung 100 im Zeitpunkt t₄ am Steuerausgang 1 das Signal ENA/NINH an den Steuereingang 20.3 des Reglers 20 ab. Daraufhin baut sich bis zum Zeitpunkt t₅ die Speisespannung VCC des Microcontrollers 21 auf. Im nachfolgenden Zeitpunkt t₆ gibt der Regler 20 das PWROR-Signal zwecks Rücksetzung des Microcontrollers 21 zur Initialisierung ab.

Um diese Reaktion sicherzustellen, kann die Halbleiterschaltung 100 - und insbesondere deren Funktionsblock 110 - noch besondere Mittel umfassen, welche bewirken, daß bei Inbetriebnahmebeaufschlagung des Einganges 14 mit VBATT (Anschalten eines Steuergerätes mit der Einrichtung an UBATT) das ENA/NINH-Signal initial zunächst erzeugt wird unabhängig vom logischen Status der EN- und STB-Eingänge, so daß eine Bestromung des Microcontrollers 21 zur Einlesung seiner anschließend den Betriebszustand der Halbleiterschaltung 100 steuernden EN- und STB-Signale überhaupt möglich ist.

Die anschließende Interpretation eines an 4 ausgegebenen ERR/INT-Signales durch den Microcontroller 21 geschieht in Abhängigkeit vom logischen Pegel der von ihm ausgegebenen STB- und EN-Signale, und, da diese die Betriebsart der Halbleiterschaltung vorgeben, in Abhängigkeit von deren Betriebsarten SLEEP, STANDBY/ RECEIVE ONLY und NORMAL, wie folgt.

Bis zur Zeitspanne t₇ hat der Microcontroller 21 seine Initialisierung samt Port-Check sicher abgeschlossen.

Während einer daran anschließenden, zwischen t₇ und t₈ definierten Zeitspanne, der sog. POWER-ON PHASE, haben beide Signale STB und EN seitens des Microcontrollers noch den logischen Pegel "L", entsprechend einer Einstellung der Halbleiterschaltung 100 auf den SLEEP-Zustand. Wird in diesem logischen Zustand ein Wake UP-Signal z.B. vom Schalter 25 an 7 erkannt, wird im Funktionsblock 145 bzw. 143 das Wake Up-Flag gesetzt. Dies führt im Zustand, bevor das STB-Signal von "L" auf "H" übergeht, zur Auslösung eines INTERRUPT-Signals an 4, d.h. im ersten Signalfenster für ERR/INT. Ein INTERRUPT an 4 in dieser Zeitspanne wird vom Microcontroller 21 als WAKEUP INTERRUPT interpretiert. Diesem Fall entspricht in **Fig. 12b** die obere Schalterstellung zum Abfragen des Wake Up-Flipflops im Block 145 bzw. 143.

In wenigstens einem Teil der POWER-ON PHASE kann vorzugsweise die Busfehlererkennung 132 durch Mittel, die beispielsweise durch die Anstiegsflanke VCC am Anschluß 10 der Halbleiterschaltung 100 wirksam sind, noch inaktiv sein.

Während der daran zwischen t₈ und t₉ sich anschließenden Zeitspanne, der sog. RECEIVE ONLY PHASE, gibt der Microcontroller STB = "H", EN = "L" aus. Wurde zuvor bzw. wird das Powerfail-Flag in 145 bzw. 143 gesetzt, führt dies jedenfalls in diesem logischen Zustand bevor das EN-Signal von "L" auf "H" übergeht zur Auslösung eines INTERRUPT-Signals an 4, d.h. im zweiten Signalfenster für ERR/INT. Ein INTERRUPT an 4 in dieser Zeitspanne wird vom Microcontroller 21 als POWERFAIL INTERRUPT interpretiert. Diesem Fall entspricht in **Fig. 12b** die mittlere Schalterstellung zum Abfragen des Powerfail-Flipflops im Block 145 bzw. 143.

Sobald der Zeitpunkt t₉ erreicht ist, ist volle Kommunikationsfähigkeit hergestellt und der Microcontroller gibt EN = "H", STB = "H" aus. Wurde zuvor bzw. wird das Bus Error-Flag im Busfehlerauswertungsblock 144 bzw. in 143 gesetzt, führt dies in diesem logischen Zustand zur Auslösung eines INTERRUPT-Signals an 4, d.h. im dritten Signalfenster für ERR/INT. Ein INTERRUPT an 4 ab dem Zeitpunkt t₉ wird vom Microcontroller 21 als BUS ERROR-INTERRUPT interpretiert. Diesem Fall entspricht in **Fig. 12b** die untere Schalterstellung zum Abfragen des Bus Error-Flipflops im Block 144 bzw. 143.

In **Fig. 12b** ist auch das Zurücksetzen des Wake Up-Flags und des Powerfail-Flags veranschaulicht. Es geschieht in Abhängigkeit von den Signalen EN und STB dann, wenn sowohl EN = "H" und STB = "H". Damit ist sichergestellt, daß nach einem folgenden Übergang in die Betriebsat SLEEP (EN = "L", STB = "L") beim erneuten Wecken das Flag-Register wieder jungfräulich und somit setzbar ist.

Ein elektronisches Gerät, welches die erfindungsgemäße Einrichtung umfaßt, kann insoweit grob ein Gesamtblockschaltbild gemäß **Fig. 13** aufweisen. Außer bereits bekannten Teilen ist hier noch eine zentrale Stützkapazität 161 für das Potential VCC am Reglerausgang 20.2, ein die Taktfrequenz des Microcontrollers 21 bestimmendes Bauteil 162 und als Schnittstelle zwischen Sensoren sowie Aktuatoren und dem Microcontroller 21 mit Busprotokoll-Modul. 22 ein Input/Output-Interface 163 angedeutet, das sowohl aus VCC als auch aus VBATT stromversorgt wird. Diese Darstellung macht ersichtlich, daß auch die Halbleiterschaltung 100 sowohl hinsichtlich ihrer oben beschriebenen Funktionen als auch ihrer Anordnung im Kommunikationspfad gewissermaßen als Interface zwischen CAN_H/ CAN-L und Microcontroller 21 bzw. dem Busprotokoll-Modul verstanden werden kann.

Auch im Hinblick auf ein solches Verständnis erweist sich als wichtig, daß die Halbleiterschaltung 100 und insbesondere deren Sendeendstufe 133 inhärent gegen alle möglichen Busfehler geschützt ist und im Rahmen des Funktionsblockes 130 vermöge der Funktionsblöcke 131 und 132 die Busbehandlung im Fehlerfalle zur Aufrechterhaltung einer Kommunikationsfunktionalität rein hardwaremäßig unter Ausschluß des Microcontrollers geschieht. Dadurch wird der Microcontroller und die ihm zugeordnete Busprotokoll-Funktion vollkommen abschaltbar.

Dieses Merkmal wird noch gestützt durch eine optional mögliche Ausbildung der Sendemittel 130 bzw. wenigstens der davon umfaßten Endstufe 133 dahingehend, daß sie sich bei Vorliegen eines Defekts in der sie umfassenden Halbleiterschaltung 100 selbsttätig vom Bus freischaltet/en, wodurch eine Blockierung des Bus-Netzes durch ein insoweit gestörtes Gerät vermieden wird.

Zur Vollständigkeit sei erwähnt, daß die Mittel der Halbleiterschaltung, vermöge derer im Fehlerfalle die Erkennung der besten noch bestehenden Möglichkeit einer Notkommunikation über den Bus und die Einstellung und/ oder Umkonfiguration und/oder Adaption der Sende- und Empfangsmittel geschieht, auf der Basis analoger Vergleiche der Busaderpotentiale mit fixen Toleranzfenstern für diese Potentiale wirken können.

Ohne Beschränkung der Allgemeinheit kann die Halbleiterschaltung 100 auch in diesem Zusammenhang figürlich nicht ausgeführte Filterelemente - insbesondere mit Tiefpaßcharakteristik - mitumfassen. Beispielsweise können solche Filterelemente zwischen Anschluß 7 und der Weck-Erkennungs-Logik 111 und zwischen den Anschlüssen 11 und 12 für CAN_H und CAN_L und den jeweiligen Eingängen des (autonomen) Empfangsblockes 120 und dem Fehlererkennungs-Modul 132 und/oder dem Buseingang der Weck-Erkennungs-Logik 111 vorgesehen sein.

Sie erhöhen den Störabstand und verringern die Ansprechempfindlichkeit der Schaltung 100 auf hochfrequente Einstreuungen (EMV) sowie auf hochfrequente Störsignale, die sich bei busfehlerbedingtem Eindrahtbetrieb über Masse GND im Pfad des Masserückschlusses zum Nutzsignal hinzuaddieren. Im einfachsten Falle kann es sich hierbei um analoge RC-Tiefpässe handeln, deren Elemente in 100 schaltungstopologisch verteilt sein können.

Gleichwohl kann es sich dabei um quasi-digitale Filter handeln, beispielsweise um solche mit vorbestimmter Ansprechzeit in der Größenordnung mehrerer Busbitlängen.

Ohne Beschränkung der Allgemeinheit kann die Halbleiterschaltung 100 in eine Biliothekszelle (Standardzelle) definiert werden, die entweder ursprünglich oder kompilierbar auf Halbleiterchips übertragen werden kann, um dort mittels verschiedener Technologien ihre physikalische Erscheinungsform zu erzeugen. In diesem Sinne umspannt der Rahmen der Erfindung weiter, daß die Halbleiterschaltung 100 zusammen mit dem Microcontroller 21 und/oder dem Busprotokoll-Modul 22 auf einem einzigen Halbleiter-Chip realisiert und beide insoweit monolithisch ausgeführt werden, wobei der so erhaltene monolithische Schaltkreis dann wenigstens zwei unterschiedlich energieversorgte Zonen aufweist.

Durch eine solche Maßnahme kann nicht nur die Anzahl erforderlicher Lötverbindungen in einem entsprechend ausgestatteten elektronischen Gerät minimiert werden. Auch der Platzbedarf reduziert sich dadurch erheblich, so daß sich eine Verwendung der Einrichtung auch in sehr klein zu haltenden Steuergeräten in Verkehrsmitteln eignet.

Bei einer solchen Realisierungsweise kann die Einrichtung besondere, mitintegrierte Mittel umfassen, welche externe Schutzmittel erübrigen, um die am Bus liegenden Empfangs- und Sendemittel nach außen fehlertolerant gegenüber allen in der Praxis busweit möglichen Fehlerzuständen zu machen.

Im Lichte des obigen bietet sich eine Verwendung der Einrichtung insbesondere in Verkehrsmitteln an, weil bei diesen als Träger entsprechender Busnetze zum Betrieb von hier betrachteten Steuergeräten die Situation eines begrenzten Energievorrates dort besonders prägnant gegeben ist.

## Patentansprüche

1. Einrichtung für den busvernetzten Betrieb eines elektronischen Gerätes, welches einen Microcontroller (21) und ein Busprotokoll-Modul zur Durchführung einer Kommunikation mit anderen Geräten über einen zweiadrigen Bus umfaßt,
**dadurch gekennzeichnet,**
daß die Einrichtung aufweist:
- eine aus einem übergeordneten Potential (UBATT/ VBATT) versorgbare, im Signalflußpfad zwischen den beiden Busadern und dem Busprotokoll-Modul (22) angeordnete und in Abhängigkeit von Statussignalen (6/EN, 5/STB) des Microcontrollers (21) wenigstens der zwei Betriebsarten
- "Senden und Empfang" (NORMAL),
- "Schlafen (SLEEP)"
fähige Halbleiterschaltung (100), welche umfaßt:
- an die beiden Busadern (CAN_H, CAN_L) angeschlossene Empfangsmittel (120), deren Ausgang mit dem Empfangseingang (Rx) des Busprotokoll-Moduls (22) kommuniziert (3) und an die beiden Busadern (CAN_H, CAN_L) angeschlossene Sendemittel (130), umfassend eine Sendeendstufe (133), deren Eingang mit dem Sendeausgang (Tx) des Busprotokoll-Moduls (22) kommuniziert (2),
- einen Weckeingang (7) aufweisende und mit dem Bus (CAN_H, CAN_L) verbundene Weckerkennungsmittel (111) und Schaltmittel (141) zur Bereitstellung an einem Steuerausgang (1) eines Einschaltsignals (ENA/NINH) nach Erkennung eines Wecksignales von besagtem Eingang (7) oder vom Bus (CAN_H, CAN_L) und zur Abgabe eines Abschaltsignals (NENA/INH) in der Betriebsart "Schlafen" (SLEEP) ;
- einen aus dem übergeordneten Potential (UBATT/ VBATT) versorgbaren Spannungsregler (20) zur Bereitstellung einer geregelten Ausgangsspannung (VCC), mit welcher der Microcontroller (21) und das Busprotokoll-Modul (22) mit Betriebsenergie versorgbar sind, wobei der Spannungsregler (20) einen mit dem vorgenannten Steuerausgang (1) der Halbleiterschaltung (100) kommunizierenden Steuereingang (20.3) aufweist und so beschaffen ist, daß daß er bei Anliegen des Einschaltsignales (ENA/NINH) einschaltet und bei Anliegen des Abschaltsignals (NENA/INH) abgeschaltet ist.

2. Einrichtung nach Anspruch 1,
**dadurch gekennzeichnet,**
- daß der Spannungsregler (20) einen Rücksetzausgang (20.204) und autonome Mittel umfaßt, die nach dem Einschalten des Spannungsreglers zur Bereitstellung eines untergeordneten Potentials (VCC) zur Speisung des Microcontrollers (21) ein Rücksetzsignal (PWROR) erzeugen, das dem Rücksetzeingang (28) des Microcontrollers (21) zuführbar ist.

3. Einrichtung nach Anspruch 1,
**dadurch gekennzeichnet,**
- daß die Halbleiterschaltung (100) ferner so beschaffen ist, daß sie beim Auftreten eines die normale Kommunikationsweise über beide Busadern beeinträchtigenden Busfehlers sich sowohl bezüglich ihrer Empfangsmittel als auch bezüglich ihrer Sendemittel ohne Unterstützung durch den Microcontroller (21) für die beste noch bestehende Möglichkeit einer Notkommunikation über den Bus einzustellen und/oder umzukonfigurieren und/oder zu adaptieren vermag.

4. Einrichtung nach Anspruch 1,
**dadurch gekennzeichnet**,
daß sie weiter umfaßt:
- zwei in Abhängigkeit von der Busteilnehmerzahl (n) festgelegte und mit der Halbleiterschaltung verbundene Abschlußelemente (16, 17),
und daß die Halbleiterschaltung weiter umfaßt:
- Busfehler-Erkennungsmittel (132) und
- kooperative Busabschluß-Umschaltmittel (131) zur Beeinflussung des Bus-Abschlusses, sowie
- Busfehler- (144) und Weck-Auswertungsmittel (145) zur Aufbereitung und Abgabe wenigstens eines an den Microcontroller (21) abgebbaren (4; 24) Fehler- bzw. Unterbrechungssignals (ERR/INT).

5. Einrichtung nach Anspruch 1,
**dadurch gekennzeichnet,**
- daß der Spannungsregler (20) Mittel zur Erzeugung eines einschaltresponsiven Reset-Signals (PWROR) und zu dessen Abgabe einen Ausgang (20.4) aufweist, welcher mit dem Microcontroller (21) verbunden (29) ist.

6. Einrichtung nach Anspruch 1,
**dadurch gekennzeichnet,**
- daß die Empfangsmittel (120) so beschaffen sind, daß sie sich unabhängig von den Sendemitteln (130) selbständig für die beste noch bestehende Möglichkeit einer Notkommunikation über den Bus einzustellen und/oder umzukonfigurieren und/oder zu adaptieren vermögen.

7. Einrichtung nach Anspruch 4,
**dadurch gekennzeichnet,**
- daß die Busfehler-Erkennungs- (132) und Busabschluß-Umschaltmittel (131) in der Lage sind, in der ersten Betriebsart (NORMAL) die Abschlußelemente (16, 17) an die beiden Busadern zu schalten (S₁, S₂), in der zweiten Betriebsart (SLEEP) statt wenigstens eines dieser Elemente (17) einen in der Halbleiterschaltung mitintegrierten ersten Ersatzabschluß (17') zu schalten (S₃) und abhängig von der Art eines erkannten Busfehlers anstelle wenigstens eines der vorgenannten Abschlußelemente (16, 17, 17') zweite und dritte in der Halbleiterschaltung integrierte Ersatzabschlüsse (26, 27; 26', 27') an wenigstens eine der beiden Busadern (CAN_H, CAN_L) zu schalten (S₁, S₂, S₃, S_{OH}).

8. Einrichtung nach Anspruch 1,
**dadurch gekennzeichnet**,
- daß die Empfangsmittel (120) und Sendemittel (130) jeweils für sich zerstörungsfrei fehlertolerant gegenüber allen busweit applikationsspezifisch möglichen Fehlerfällen realisiert sind.

9. Einrichtung nach Anspruch 1,
**dadurch gekennzeichnet,**
- daß wenigstens die Sendeendstufe (133) im Falle eines Eigenfehlers der Einrichtung vom Bus (CAN_H/CAN_L) freischaltbar (EN) ist.

10. Einrichtung nach Anspruch 1,
**dadurch gekennzeichnet,**
- daß die Sendemittel (130) Mittel umfassen, mittels derer im Falle eines Eigenfehlers der Einrichtung die Stromversorgung der Sendeendstufe (133) abschaltbar ist.

11. Einrichtung nach Anspruch 1,
**dadurch gekennzeichnet,**
- daß die Halbleiterschaltung (100) so beschaffen ist, daß sie in der Betriebsart "Schlafen" (SLEEP) einen impedanzmäßig asymmetrischen Abschluß der beiden Busadern (CAN_H, CAN_L) gegenüber einem Bezugspotential (GND) bewirkt.

12. Einrichtung nach Anspruch 7,
**dadurch gekennzeichnet,**
- daß der erste Ersatzabschluß (17') an dem übergeordneten Potential (UBATT/VBATT) liegt.

13. Einrichtung nach Anspruch 7,
**dadurch gekennzeichnet,**
- daß es sich bei dem ersten Ersatzabschluß (17') um einen Widerstand handelt, welcher einen Wert aufweist, der in der Größenordnung eines Vielfachen des Wertes des normalen Abschlußwiderstandes (17) liegt, wobei dieses Vielfache der Anzahl n von Busteilnehmern entspricht.

14. Einrichtung nach Anspruch 7,
**dadurch gekennzeichnet,**
- daß die zweiten und dritten Ersatzabschlüsse (26, 27) durch eingeprägte Stromquellen realisiert sind.

15. Einrichtung nach Anspruch 7,
**dadurch gekennzeichnet,**
- daß die zweiten und dritten Ersatzabschlüsse (26, 27) durch hochohmige Widerstände (26', 27') realisiert sind.

16. Einrichtung nach Anspruch 1,
**dadurch gekennzeichnet,**
- daß die Halbleiterschaltung (100) ferner die Betriebsarten
- Nur-Empfang (RECEIVE ONLY)
- Bereitschaft (STANDBY)
aufweist, in welchen entweder die Stromversorgung der Sendeendstufe abschaltbar oder die Sendeendstufe (133) vom Bus (CAN_H/CAN_L) selektiv freischaltbar (EN) ist.

17. Einrichtung nach Anspruch 1,
**dadurch gekennzeichnet,**
- daß die Halbleiterschaltung (100) Mittel (110) zur Überwachung wenigstens des übergeordneten Potentials UBATT/VBATT auf Unterschreitung eines (ersten) Grenzwertes (VL1) umfaßt sowie Auswertungsmittel (145), welche ein erkanntes Abfallen dieses Potentials unter besagten Grenzwert in ein POWERFAIL-Fehler- bzw. Unterbrechungssignal (4/ERR/INT) für den Microcontroller (21) auswerten.

18. Einrichtung nach Anspruch 1,
**dadurch gekennzeichnet,**
- daß die Halbleiterschaltung (100) Mittel (110) zur Überwachung des Speisepotentials (VCC) des Microcontrollers (21) auf Unterschreitung eines zweiten Grenzwertes (VL2) sowie Auswertungsmittel (145) umfaßt, welche ein erkanntes Abfallen dieses Potentials unter besagten Grenzwert in ein POWERFAIL-Fehler- oder Unterbrechungssignal (4/ERR/INT) für den Microcontroller (21) auswerten.

19. Einrichtung nach Anspruch 17,
**dadurch gekennzeichnet**,
- daß sie Busfehler-Erkennungs- (132) und Busabschluß-Umschaltmittel (131) sowie Busfehler-Auswertungsmittel (144) zur Aufbereitung wenigstens eines an den Microcontroller (21) abgebbaren (4; 24) Fehler- bzw. Unterbrechungssignals (ERR/INT) umfaßt und letztere Mittel ausgangsseitig mit den Mitteln (145) zur Auswertung des Unterschreitens des (ersten) Grenzwertes (VL1) verknüpft sind.

20. Einrichtung nach Ansprüchen 17 und 18,
**dadurch gekennzeichnet,**
- daß sie logische Mittel umfaßt welche bewirken, daß das Fehler- und Unterbrechungssignal (ERR/INT) erzeugt wird, wenn beide Grenzwerte (VL1, VL2) unterschritten werden bzw. worden sind.

21. Einrichtung nach Anspruch 1,
**dadurch gekennzeichnet,**
- daß die Endstufe (133) im Falle des Abfallens des übergeordneten Potentials (UBATT/VBATT) unter einen vorbestimmten Grenzwert sich vom Bus (CAN_H/CAN_L) freischaltet.

22. Einrichtung nach Anspruch 21,
**dadurch gekennzeichnet,**
- daß die Freischaltung durch Blockierung eines Steuereinganges (EN) zur aktiven Anschaltung der Sendemittel an den Bus (CAN_H/CAN_L) geschieht.

23. Einrichtung nach Anspruch 3,
**dadurch gekennzeichnet,**
- daß die Halbleiterschaltung Mittel umfaßt, vermöge derer im Fehlerfalle die Erkennung der besten noch bestehenden Möglichkeit einer Notkommunikation über den Bus und die Einstellung und/oder Umkonfiguration und/oder Adaption auf der Basis analoger Vergleiche der Busaderpotentiale mit Toleranzfenstern geschieht.

24. Einrichtung nach Anspruch 23,
**dadurch gekennzeichnet,**
- daß die Einstellung und/oder Umkonfiguration und/ oder Adaption in einer Botschaftsverluste vermeidenden Weise geschieht.

25. Einrichtung nach Anspruch 1,
**dadurch gekennzeichnet,**
- daß die Halbleiterschaltung (100) Filterelemente umfaßt, welche wenigstens zwischen jede der beiden Bus-adern (CAN_H, CAN_L) und dem entsprechendem Eingang der Empfangsmittel (120) sowie zwischen dem Eingang für ein Wecksignal (7) und den Weck-Erkennungsmitteln (111) angeordnet sind.

26. Einrichtung nach Anspruch 1,
**dadurch gekennzeichnet,**
- daß die Halbleiterschaltung (100) in der Art einer kompilierbaren Standardzelle auf einem Halbleiterchip monolithisch realisiert ist.

27. Einrichtung nach Anspruch 1,
**dadurch gekennzeichnet,**
- daß die Halbleiterschaltung (100) zusammen mit dem Busprotokoll-Modul (22) monolithisch integriert ist.

28. Einrichtung nach Anspruch 1,
**dadurch gekennzeichnet,**
- daß die Halbleiterschaltung (100) zusammen mit dem Microcontroller (21) monolithisch integriert ist.

29. Verwendung der Einrichtung gemäß Anspruch 1 in einem Verkehrsmittel.

## Claims

1. Device for the bus-networked operation of an electronic unit which comprises a microcontroller (21) and a bus protocol module for implementing communications with other units via a two-core bus, characterized in that the device has:
- a semiconductor circuit (100) which can be supplied from a superordinate potential (UBATT/VBATT), is arranged in the signal flow path between the two bus cores and the bus protocol module (22), is capable of at least the two operating modes
- "transmission and reception" (NORMAL)
- "sleep" (SLEEP)
as a function of status signals (6/EN, 5/STB) of the microcontroller (21) and comprises:
- receiving means (120), which are connected to the two bus cores (CAN_H, CAN_L) and whose output communicates (3) with the reception input (Rx) of the bus protocol module (22), and transmitting means (130), which are connected to the two bus cores (CAN_H, CAN_L) and comprise a transmitting output stage (133), the input of which communicates (2) with the transmission output (Tx) of the bus protocol module (22),
- wake-up identification means (111), which have a wake-up input (7) and are connected to the bus (CAN_H, CAN_L), and switching means (141) for providing, at a control output (1), a switch-on signal (ENA/NINH) after identification of a wake-up signal from the said input (7) or from the bus (CAN_H, CAN_L) and for emitting a switch-off signal (NENA/INH) in the operating mode "sleep" (SLEEP);
- a voltage regulator (20) which can be supplied from the superordinate potential (UBATT/VBATT) and serves to provide a regulated output voltage (VCC) with which the microcontroller (21) and the bus protocol module (22) can be supplied with operating power, the voltage regulator (20) having a control input (20.3) which communicates with the aforementioned control output (1) of the semiconductor circuit (100), and being configured in such a way that it switches on in the presence of the switch-on signal (ENA/NINH) and is switched off in the presence of the switch-off signal (NENA/INH).

2. Device according to Claim 1, characterized
- in that the voltage regulator (20) comprises a reset output (20.4) and autonomous means which generate a reset signal (PWROR) after the voltage regulator has been switched on for the purpose of providing a secondary potential (VCC) for the supply of the microcontroller (21), which reset signal can be fed to the reset input (28) of the microcontroller (21).

3. Device according to Claim 1, characterized
- in that the semiconductor circuit (100) is furthermore configured in such a way that, in the event of a bus error occurring which impairs the normal method of communication via the two bus cores, the said semiconductor circuit can be set and/or reconfigured and/or adapted for the best possibility which still exists for emergency communication via the bus, both with regard to its receiving means and with regard to its transmitting means, without any support by the microcontroller (21) .

4. Device according to Claim 1, characterized in that it further comprises:
- two termination elements (16, 17) which are defined as a function of the number (n) of bus subscribers and are connected to the semiconductor circuit,
and in that the semiconductor circuit further comprises:
- bus error identification means (132) and
- cooperative bus termination changeover means (131) for influencing the bus termination, as well as
- bus error (144) and wake-up evaluation means (145) for conditioning and emitting at least one error or interrupt signal (ERR/INT) which can be output (4; 24) to the microcontroller (21).

5. Device according to Claim 1, characterized
- in that the voltage regulator (20) has means for generating a switch-on-responsive reset signal (PWROR) and, for emitting the latter, an output (20.4) which is connected (29) to the microcontroller (21).

6. Device according to Claim 1, characterized
- in that the receiving means (120) are configured in such a way that, independently of the transmitting means (130), they can be set and/or reconfigured and/or adapted independently for the best possibility which still exists for emergency communication via the bus.

7. Device according to Claim 4, characterized
- in that the bus error identification means (132), and bus termination changeover means (131) can switch-connect (S₁, S₂) the termination elements (16, 17) to the two bus cores in the first operating mode (NORMAL) and, in the second operating mode (SLEEP) can switch-connect (S₃) a first back-up termination (17') concomitantly integrated in the semiconductor circuit, instead of at least one of the said elements (17), and, depending on the nature of an identified bus error, can switch-connect (S₁, S₂, S₃, S_{OH}) second and third back-up terminations (26, 27; 26', 27') integrated in the semiconductor circuit, instead of at least one of the aforementioned termination elements (16, 17, 17'), to at least one of the two bus cores (CAN_H, CAN_L).

8. Device according to Claim 1, characterized
- in that the receiving means (120) and transmitting means (130) are in each case intrinsically realized, in a manner free from destruction, such that they are tolerant of errors with respect to all error instances which are possible in an application-specific manner throughout the bus.

9. Device according to Claim 1, characterized
- in that at least the transmitting output stage (133) can be disconnected (EN) from the bus (CAN_H/CAN_L) in the event of an inherent error of the device.

10. Device according to Claim 1, characterized
- in that the transmitting means (130) comprise means which make it possible to switch off the power supply of the transmitting output stage (133) in the event of an inherent error of the device.

11. Device according to Claim 1, characterized
- in that the semiconductor circuit (100) is configured in such a way that, in the operating mode "sleep" (SLEEP), it effects an asymmetric (in terms of impedance) termination of the two bus cores (CAN_H, CAN_L) with respect to a reference potential (GND).

12. Device according to Claim 7, characterized
- in that the first back-up termination (17') is connected to the superordinate potential (UBATT/VBATT).

13. Device according to Claim 7, characterized
- in that the first back-up termination (17') is a resistor having a value of the order of magnitude of a multiple of the value of the normal termination resistor (17), this multiple corresponding to the number n of bus subscribers.

14. Device according to Claim 7, characterized
- in that the second and third back-up terminations (26, 27) are realized by impressed current sources.

15. Device according to Claim 7, characterized
- in that the second and third back-up terminations (26, 27) are realized by high-value resistors (26', 27').

16. Device according to Claim 1, characterized
- in that the semiconductor circuit (100) furthermore has the operating modes
- receive only (RECEIVE ONLY)
- standby (STANDBY),
in which, either the power supply of the transmitting output stage can be switched off or the transmitting output stage (133) can be selectively disconnected (EN) from the bus (CAN_H/CAN_L).

17. Device according to Claim 1, characterized
- in that the semiconductor circuit (100) comprises means (110) for monitoring at least the superordinate potential (UBATT/VBATT) for the downwards transgression of a (first) limit value (VL1), as well as evaluation means (145) which evaluate an identified drop in this potential below the said limit value into a POWER FAIL error or interrupt signal (4/ERR/INT) for the microcontroller (21).

18. Device according to Claim 1, characterized
- in that the semiconductor circuit (100) comprises means (110) for monitoring the supply potential (VCC) of the microcontroller (21) for the downwards transgression of a second limit value (VL2), as well as evaluation means (145) which evaluate an identified drop in this potential below the said limit value into a POWER FAIL error or interrupt signal (4/ERR/INT) for the microcontroller (21).

19. Device according to Claim 17, characterized
- in that it comprises bus error identification means (132) and bus termination changeover means (131) as well as bus error evaluation means (144) for conditioning at least one error or interrupt signal (ERR/INT) which can be output (4; 24) to the microcontroller (21), and the latter means are logically combined on the output side with the means (145) for evaluating the downwards transgression of the (first) limit value (VL1).

20. Device according to Claims 17 and 18, characterized
- in that it comprises logic means which cause the error and interrupt signal (ERR/INT) to be generated when both limit values (VL1, VL2) are or have been downwardly transgressed.

21. Device according to Claim 1, characterized
- in that the output stage (133) is disconnected from the bus (CAN_H/CAN_L) when the superordinate potential (UBATT/VBATT) drops below a predetermined limit value.

22. Device according to Claim 21, characterized
- in that the disconnection is effected by blocking a control input (EN) for the active connection of the transmitting means to the bus (CAN_H/CAN_L).

23. Device according to Claim 3, characterized
- in that the semiconductor circuit comprises means by dint whereof, in the event of an error, the identification of the best possibility which still exists for emergency communication via the bus and the setting and/or reconfiguration and/or adaptation are effected on the basis of analog comparisons of the bus core potentials with tolerance windows.

24. Device according to Claim 23, characterized
- in that the setting and/or reconfiguration and/or adaptation are effected in a manner which avoids message losses.

25. Device according to Claim 1, characterized
- in that the semiconductor circuit (100) comprises filter elements which are arranged at least between each of the two bus cores (CAN_H, CAN_L) and the corresponding input of the receiving means (120) as well as between the input for a wake-up signal (7) and the wake-up identification means (111).

26. Device according to Claim 1, characterized
- in that the semiconductor circuit (100) is monolithically realized after the manner of a compilable standard cell on a semiconductor chip.

27. Device according to Claim 1, characterized
- in that the semiconductor circuit (100) is monolithically integrated together with the bus protocol module (22).

28. Device according to Claim 1, characterized
- in that the semiconductor circuit (100) is monolithically integrated together with the microcontroller (21).

29. Use of the device according to Claim 1 in a means of transport.

## Revendications

1. Dispositif pour le fonctionnement en réseau par bus d'un appareil électronique, comprenant un microcontrôleur (21) et un module à protocole de bus, pour effectuer une communication avec d'autres appareils, par l'intermédiaire d'un bus bifilaire,
caractérisé en ce que le dispositif présente :
- un circuit à semi-conducteur (100), susceptible d'être alimenté depuis un potentiel hiérarchiquement supérieur (UBATT/VBATT), disposé dans le chemin de flux de signal entre les deux conducteurs de bus et le module à protocole de bus (22) et apte au moins aux deux types de fonctionnement
- "émission et réception" (NORMAL),
- "sommeil (SLEEP)"
en fonction des signaux d'état (6/EN, 5/STB) du microcontrôleur (21), le circuit à semi-conducteur (100) comprenant :
- des moyens de réception (120), raccordés aux deux conducteurs de bus (CAN_H, CAN_L), dont la sortie communique avec l'entrée de réception (Rx) du module à protocole de bus (22), et des moyens d'émission (130), raccordés aux deux conducteurs de bus ((CAN_H, CAN_L), comprenant un étage final d'émission (133); dont l'entrée communique (2) avec la sortie d'émission (Tx) du module à protocole de bus (22),
- des moyens d'identification de réveil (111), présentant une entrée de réveil (7) et reliés au bus (CAN_H, CAN_L), et des moyens de commutation (141) pour fournir à une sortie de commande (1) un signal de mise en service (ENA/NINH) après identification d'un signal de réveil venant de ladite entrée (7) ou bien du bus (CAN_H, CAN_L) et pour fournir un signal de mise hors service (ENA/NINH) dans le mode de fonctionnement "Sommeil" (SLEEP);
- un régulateur de tension (20), susceptible d'être alimenté depuis le potentiel (UBATT/VBATT) hiérarchiquement supérieur, pour fournir une tension de sortie (VCC) régulée, à l'aide de laquelle le microcontrôleur (21) et le module à protocole de bus (22) sont susceptibles d'être alimentés en énergie de fonctionnement, le régulateur de tension (20) présentant une entrée de commande (20.3) communiquant avec la sortie de commande (1) précitée du circuit à semi-conducteur (100) et étant réalisé de manière que, en cas d'application du signal de mise en service (ENA/NINH), il est mis en service et que, en cas d'application du signal de mise hors service (NENA/INH), il est mis hors service.

2. Dispositif selon la revendication 1,
caractérisé en ce que
- le régulateur de tension (20) comprend une sortie de remise à l'état initial (20.204) et des moyens autonomes qui, après la mise en service du régulateur de tension, pour fournir un potentiel (VCC) hiérarchiquement inférieur pour alimenter le microcontrôleur (21), génèrent un signal de remise à l'état initial (PWROR) qui est susceptible d'être amené à l'entrée de remise à l'état initial (28) du microcontrôleur (21).

3. Dispositif selon la revendication 1,
caractérisé en ce que
le circuit à semi-conducteur (100) est en outre réalisé de manière que, lors de la survenance d'un défaut de bus dégradant la manière normale de communiquer par les deux conducteurs de bus, tant concernant ses moyens de réception qu'également concernant ses moyens d'émission, sans assistance par le microcontrôleur (21), il permet de régler et/ou de reconfigurer et/ou d'adapter pour obtenir la meilleure possibilité encore possible d'une communication de secours par le bus.

4. Dispositif selon la revendication 1,
caractérisé en ce qu'
il comprend en outre :
- deux éléments de terminaison (16, 17), fixés en fonction du nombre de participants au bus (n) et reliés au circuit à semi-conducteur, et en ce que le circuit à semi-conducteur comprend en outre :
- des moyens d'identification de défaut de bus (132), et
- des moyens de commutation de terminaison de bus (131) coopératifs, afin d'influer sur la terminaison de bus, ainsi que
- des moyens d'évaluation de défaut de bus (144) et de réveil (145) pour préparer et fournir au moins un signal de défaut ou d'interruption (ERR/INT) susceptible d'être amené (4; 24) au microcontrôleur (21).

5. Dispositif selon la revendication 1,
caractérisé en ce que
- le régulateur de tension (20) est relié à des moyens pour générer un signal reset (PWROR) réagissant à la mise en service et présente, pour sa fourniture, une sortie (20.4) reliée (29) au microcontrôleur (21).

6. Dispositif selon la revendication 1,
caractérisé en ce que
- les moyens de réception (120) sont réalisés de manière qu'ils permettent de régler et/ou de reconfigurer et/ou d'adapter, indépendamment des moyens d'émission (130), de façon autonome, pour obtenir la meilleure possibilité restant encore d'une communication de secours par le bus.

7. Dispositif selon la revendication 4,
caractérisé en ce que
- les moyens d'identification de défaut de bus (132) et de commutation de terminaison de bus (131) sont en mesure, lorsqu'on est dans le premier type de fonctionnement (NORMAL), de commuter (S₁, S₂) les éléments de terminaison (16, 17) sur les deux conducteurs de bus, lorsqu'on est dans le deuxième' type de fonctionnement (SLEEP), au lieu d'au moins l'un de ces éléments (17) , de commuter (S₃) une première terminaison de remplacement (17'), intégrée conjointement dans le circuit à semi-conducteur et, en fonction du type de défaut de bus identifié, au lieu d'au moins l'un des éléments de terminaison (16, 17, 17') précités, de commuter (S₁, S₂, S₃,S_{OH}) des deuxième et troisième terminaisons de remplacement (26, 27; 26', 27') intégrées dans le circuit à semi-conducteur, sur au moins l'un des deux conducteurs de bus (CAN_H, CAN_L).

8. Dispositif selon la revendication 1,
caractérisé en ce que
- les moyens de réception (120) et les moyens d'émission (130) sont chacun réalisés en soi sans destruction, à tolérance de panne par rapport à tous les cas de défaut possibles, de façon spécifique à l'application, dans les limites du bus.

9. Dispositif selon la revendication 1,
caractérisé en ce qu'
- au moins l'étage final d'émission (133) est libérable (EN) du bus (CAN_H, CAN_L), dans le cas d'un défaut propre du dispositif.

10. Dispositif selon la revendication 1,
caractérisé en ce que
- les moyens d'émission (130) comprennent des moyens à l'aide desquels, en cas de défaut propre, le dispositif peut mettre hors service l'alimentation électrique de l'étage final d'émission (133).

11. Dispositif selon la revendication 1,
caractérisé en ce que
- le circuit à semi-conducteur (100) est réalisé de manière que, dans le type de fonctionnement "Sommeil" (SLEEP), il provoque une terminaison asymétrique en impédance des deux conducteurs de bus (CAN_H, CAN_L) par rapport à un potentiel de référence (GND).

12. Dispositif selon la revendication 7,
caractérisé en ce que
- la première terminaison de remplacement (17') est placée au potentiel (UBATT/VBATT) hiérarchiquement supérieur.

13. Dispositif selon la revendication 7,
caractérisé,
- en ce qu'il s'agit, pour la première terminaison de remplacement (17'), d'une résistance présentant une valeur de l'ordre de grandeur d'un multiple de la valeur de la résistance de terminaison normale (17), ce multiple correspondant au nombre n de participants au bus.

14. Dispositif selon la revendication 7,
caractérisé en ce que
- les deuxième et troisième terminaisons de remplacement (26, 27) sont réalisées par des sources électriques injectées.

15. Dispositif selon la revendication 7,
caractérisé en ce que
- les deuxième et troisième terminaisons de remplacement (26, 27) sont réalisées par des résistances (26', 27') fortement ohmiques.

16. Dispositif selon la revendication 1,
caractérisé en ce que
- le circuit à semi-conducteur (100) présente en outre les types de fonctionnement
- réception seule (RECEIVE ONLY)
- disponibilité (STANDBY)
dans lesquels soit l'alimentation électrique de l'étage final d'émission est susceptible d'être mise hors service, soit l'étage final d'émission (133) est susceptible d'être libéré sélectivement (EN) du bus (CAN_H, CAN_L).

17. Dispositif selon la revendication 1,
caractérisé en ce que
- le circuit à semi-conducteur (100) comprend des moyens (110) pour surveiller au moins le potentiel (UBATT/VBATT) hiérarchiquement supérieur, quant à la descente au-dessous d'une (première) valeur limite (VL1), ainsi que des moyens d'évaluation (145), qui évaluent une descente identifiée de ce potentiel au-dessous de ladite valeur limite, en produisant un signal de défaut POWERFAIL ou d'interruption (4/ERR/INT) pour le microcontrôleur (21).

18. Dispositif selon la revendication 1,
caractérisé en ce que
- le circuit à semi-conducteur (100) comprend des moyens (110) pour surveiller le potentiel d'alimentation (VCC) du microcontrôleur (21) en cas de descente au-dessous d'une deuxième valeur limite (VL2), ainsi que des moyens d'évaluation (145) qui évaluent une descente identifiée de ce potentiel au-dessous de ladite valeur limite en produisant un signal de défaut POWERFAIL ou d'interruption (4/ERR/INT) pour le microcontrôleur (21).

19. Dispositif selon la revendication 17,
caractérisé en ce qu'
- il comprend des moyens d'identification de défaut de bus (132) et de commutation de terminaison de bus (131), ainsi que des moyens d'évaluation de défaut de bus (144), pour préparer au moins un signal de défaut ou d'interruption (ERR/INT) pouvant être délivré (4; 24) au microcontrôleur (21), et ces moyens étant combinés, côté sortie, aux moyens (145) d'évaluation de la descente au-dessous de la (première) valeur limite (VL1).

20. Dispositif selon les revendications 17 et 18,
caractérisé en ce qu'
- il comprend des moyens logiques qui font que le signal de défaut ou d'interruption (ERR/INT) est généré lorsqu'on est descendu au-dessous de l'une ou des deux valeurs limite (VL1, VL2).

21. Dispositif selon la revendication 1,
caractérisé en ce que
- l'étage final (133) est libéré du bus (CAN_H/CAN_L) en cas de descente du potentiel (UBATT/VBATT) hiérarchiquement supérieur au-dessous d'une valeur limite prédéterminée.

22. Dispositif selon la revendication 21,
caractérisé en ce que
- la libération se fait par blocage d'une entrée de commande (EN) pour produire la mise hors service active des moyens d'émission au bus (CAN_H/CAN_L).

23. Dispositif selon la revendication 3,
caractérisé en ce que
- le circuit à semi-conducteur comprend des moyens à l'aide desquels, en cas de défaut, sont effectués l'identification de la meilleure possibilité, restant encore, d'une communication de secours par le bus, et le réglage et/ou la reconfiguration et/ou l'adaptation, sur la base de comparaisons analogues, à des fenêtres de tolérance, des potentiels des conducteurs de bus.

24. Dispositif selon la revendication 23,
caractérisé en ce que
- le réglage et/ou la reconfiguration et/ou l'adaptation s'effectuent d'une manière évitant des pertes de message.

25. Dispositif selon la revendication 1,
caractérisé en ce que
- le circuit à semi-conducteur (100) comprend des éléments de filtrage qui sont disposés au moins entre chacun des deux conducteurs de bus (CAN_H/CAN_L) et l'entrée correspondante des moyens de réception (120), ainsi qu'entre l'entrée pour un signal de réveil (7) et les moyens d'identification de réveil (111).

26. Dispositif selon la revendication 1,
caractérisé en ce que
- le circuit à semi-conducteur (100) est de réalisation monolithique, à la façon d'une cellule standard compilable sur une puce à semi-conducteur.

27. Dispositif selon la revendication 1,
caractérisé en ce que
- le circuit à semi-conducteur (100) est intégré de façon monolithique, conjointement avec le module à protocole de bus (22).

28. Dispositif selon la revendication 1,
caractérisé en ce que
- le circuit à semi-conducteur (100) est intégré de façon monolithique, conjointement avec le microcontrôleur (21).

29. Utilisation du dispositif selon la revendication 1, dans un moyen de transport.
